(19) **Europäisches Patentamt European Patent Office Office européen des brevets**

(11) **EP 4 707 250 A1**

(12) **EUROPEAN PATENT APPLICATION**
published in accordance with Art. 153(4) EPC

(43) Date of publication:
**11.03.2026 Bulletin 2026/11**

(21) Application number: **24836180.0**

(22) Date of filing: **14.05.2024**

(51) International Patent Classification (IPC):
*C02F 1/469* (2023.01)   *C02F 1/461* (2023.01)
*B01D 61/42* (2006.01)

(52) Cooperative Patent Classification (CPC):
**C02F 1/46109; C02F 1/4691;** C02F 2001/46133;
C02F 2001/46138; C02F 2001/46161;
C02F 2305/08

(86) International application number:
**PCT/KR2024/006520**

(87) International publication number:
**WO 2025/009731 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.07.2023 KR 20230086101**
**22.01.2024 KR 20240009639**

(71) Applicant: **Samsung Electronics Co., Ltd.**
**Suwon-si, Gyeonggi-do 16677 (KR)**

(72) Inventors:
• **JUNG, Wonji**
  **Suwon-si Gyeonggi-do 16677 (KR)**
• **KIM, Sungwon**
  **Suwon-si Gyeonggi-do 16677 (KR)**
• **KIM, Jeeyeon**
  **Suwon-si Gyeonggi-do 16677 (KR)**
• **PARK, Heejin**
  **Suwon-si Gyeonggi-do 16677 (KR)**
• **HONG, Sungpil**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRODE FOR CAPACITIVE DEIONIZATION APPARATUS, METHOD OF MANUFACTURING SAME, AND WATER TREATMENT APPARATUS**

(57)   Disclosed is an electrode for a capacitive deionization apparatus including a current collector and an active material layer disposed on one side of the current collector, wherein the active material layer includes: a plurality of pore structures, each of the plurality of pore structures including a plurality of carbon nanotubes; and a binder fixing the plurality of pore structures to the current collector, and the each of the plurality of pore structure includes a wide bottom-narrow top structure widening in a direction away from the current collector.

[FIG.4]

EP 4 707 250 A1

**Description**

[Technical Field]

The disclosure relates to an electrode used in capacitive deionization (CDI) technology, a method of manufacturing the same, and a water treatment apparatus including the electrode for CDI.

[Background Art]

A capacitive deionization (CDI) process, as an example of water treatment processes, generally refers to a process of removing ions from water flowing between two electrodes by applying an electric charge thereto by adsorbing the ions to the electrodes, and desorbing the ions adsorbed to the electrodes therefrom by inverting the electrode voltage. That is, while a fluid such as water passes between two porous carbonaceous electrode layers formed of activated carbon, anions move to a positive electrode and cations move to a negative electrode by an electrostatic force to be electrically charged, and water is discharged as treated water in a pure form from which ions are removed.

The CDI technology necessarily includes electrodes generating a potential difference, and in this case, each electrode includes an active material, a conductive material, and a binder coated on a current collector. Among them, as the active material, activated carbon having conductivity and a wide specific surface area is widely used. However, common activated carbon is merely a conductive material having fine pores (< 2 nm) randomly distributed therein, and rather, the randomly distributed pores act as a factor inhibiting maximum utilization of the large specific surface area of the activated carbon. In an electrode for CDI, size and distribution of pores are the most important factors in determining the adsorbed number of cations, and mesopores with a size of 2 $\mu$m to 50 $\mu$m are suitable for cation adsorption. Thus, it is important to manufacture electrodes with a high proportion of mesopores rather than a material with a large specific area.

[DISCLOSURE]

[Technical Problem]

Provided are an electrode for a capacitive deionization apparatus that may have increased ion adsorption efficiency, a method of manufacturing the same, and a water treatment apparatus.

The technical problems to be solved are not limited to the technical problems as described above, and thus other technical problems may be inferred by those of ordinary skill in the art based on the following descriptions.

[Technical Solution]

In accordance with an aspect of the present disclosure, an electrode for a capacitive deionization apparatus, the electrode comprising: a current collector; and an active material layer disposed on one side of the current collector, wherein the active material layer comprises: a plurality of pore structures, each of the plurality of pore structures comprising a plurality of carbon nanotubes; and a binder fixing the plurality of pore structures to the current collector, and wherein the each of the plurality of pore structures a wide bottom-narrow top structure widening in a direction away from the current collector.

In accordance with another aspect of the present disclosure, a water treatment apparatus comprising: at least one capacitive deionization module comprising: a first electrode; a second electrode, and a channel formed between the first electrode and the second electrode, wherein each of the first electrode and the second electrode comprises a current collector and an active material layer disposed on one side of the current collector, wherein the active material layer comprises: a plurality of pore structures including a plurality of carbon nanotubes; and a binder fixing the plurality of pore structures to the current collector, and wherein each of the plurality of pore structures includes a wide bottom-narrow top structure widening in a direction away from the current collector.

In accordance with another aspect of the present disclosure, a method of manufacturing an electrode for a capacitive deionization apparatus, the method comprising: depositing, by patterning, an iron (Fe) catalyst on a surface of a silicon substrate; growing carbon nanotubes by applying a carbon source gas to the deposited Fe catalyst; fixing, by a first binder, the grown carbon nanotubes to the silicon substrate; condensing the carbon nanotubes to form a first pore structure comprising a wide top-narrow bottom structure narrowing in a direction away from the silicon substrate; and

forming, by transferring the condensed carbon nanotubes onto a surface of a current collector coated with a second binder, a second pore structure including a wide bottom-narrow top structure widening in a direction away from the current collector.

[Advantageous Effects]

According to an embodiment, a pore-clogging phenomenon or a co-ion repulsion caused by ions adsorbed to the surfaces of electrodes may be minimized, and thus ion adsorption performance may be improved, and accordingly an electric double layer may be formed over the entire surface area, thereby minimizing performance difference between the electrodes.

According to an embodiment, the intensity of an electric field generated by applying a voltage may be optimized by controlling a shape of an outer region of the pore structure.

According to an embodiment, ion adsorption performance may be improved by forming a structure maximizing the surface area by controlling the length of the carbon nanotube structure, and thus the size of the module may be minimized and the number of stacked electrodes may be reduced.

According to an embodiment, a polymer binder may support the structures of the electrodes and minimize delamination thereof from the current collector.

However, the effects obtainable by the electrode for water treatment and a water treatment apparatus including the same according to the embodiments are not limited to those described above, and any other effects not mentioned herein will be clearly understood from the following descriptions by those skilled in the art to which the present disclosure pertains.

[Description of Drawings]

FIG. 1 is a conceptual diagram illustrating a water treatment apparatus according to an embodiment of the present disclosure.

FIG. 2 illustrates a plurality of pores included in an active material layer of a water treatment apparatus according to an embodiment of the present disclosure.

FIG. 3 is an enlarged view (III) of a structure of an electrode for a capacitive deionization apparatus in a water treatment apparatus according to an embodiment of the present disclosure.

FIG. 4 is a diagram illustrating a flow of ions in an electrode for a capacitive deionization apparatus according to an embodiment of the present disclosure.

FIG. 5 is a diagram illustrating an ion-clogging phenomenon in a conventional electrode for a capacitive deionization apparatus having a narrow bottom structure.

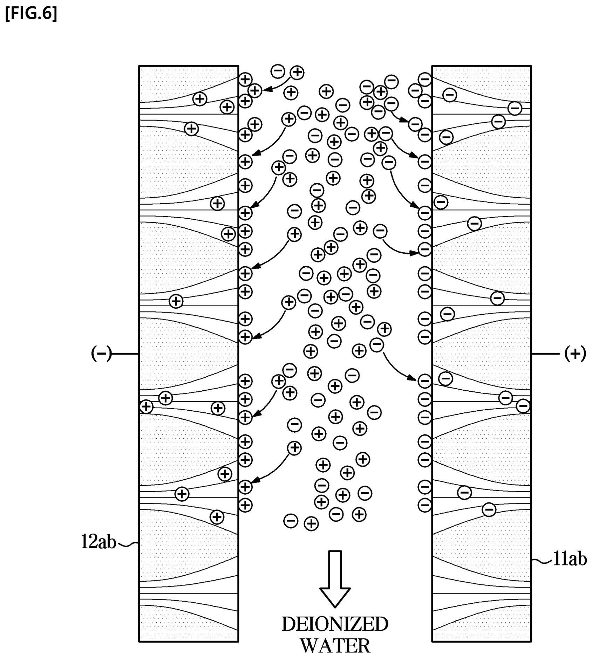

FIG. 6 is a conceptual diagram for describing migration of ions in a positive electrode in the case where a water treatment apparatus according to an embodiment of the present disclosure performs a deionization operation.

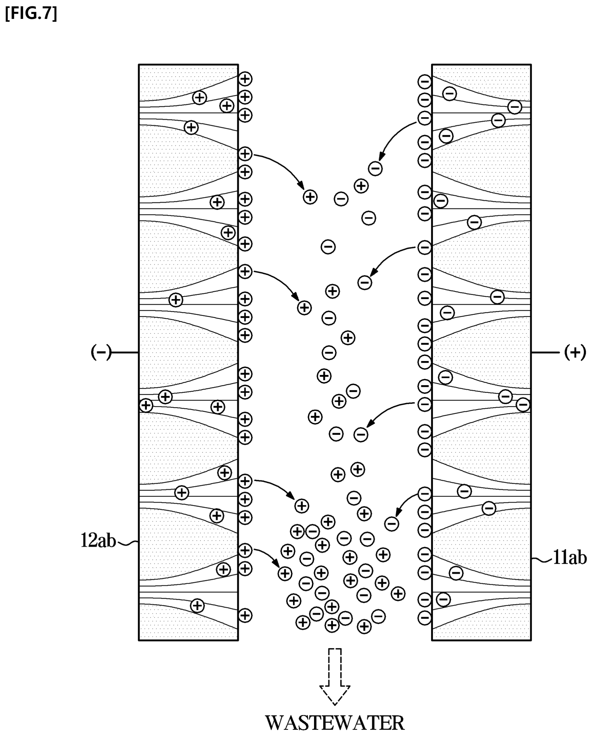

FIG. 7 is a conceptual diagram for describing migration of ions in a positive electrode in the case where a water treatment apparatus according to an embodiment of the present disclosure performs a regeneration operation.

FIG. 8 is a conceptual diagram illustrating that deionization efficiency is decreased by scales generated by an ion-clogging phenomenon in a conventional electrode for a capacitive deionization apparatus.

FIG. 9 is a flowchart showing a method of manufacturing an electrode for a capacitive deionization apparatus according to an embodiment of the present disclosure.

FIG. 10 is a diagram illustrating a structure in which carbon nanotubes are fixed to a substrate by a binder.

FIG. 11 is a diagram illustrating that a condensed shape of parts of carbon nanotubes not bound to a binder.

FIG. 12 is a diagram illustrating a structure in which a binder is etched and condensed carbon nanotubes are fixed to a substrate.

FIG. 13 is a diagram illustrating a structure in which carbon nanotubes are transferred to a current collector.

FIG. 14 is a diagram showing a shape of an outermost cross-section of a pore structure.

FIG. 15 is a diagram illustrating a pore structure having a comb shape.

FIG. 16 is a diagram illustrating a washing machine connected to a water treatment apparatus according to an embodiment of the present disclosure.

FIG. 17 is a cross-sectional view of a washing machine to which a water treatment apparatus according to an embodiment of the present disclosure is applied.

FIG. 18 is a diagram illustrating a refrigerator connected to a water treatment apparatus according to an embodiment of the present disclosure.

FIG. 19 is a diagram illustrating a refrigerator connected to a water treatment apparatus according to an embodiment of the present disclosure in a state where doors are open.

FIG. 20 is a cross-sectional view of a refrigerator to which a water treatment apparatus according to an embodiment of the present disclosure is applied.

FIG. 21 is a diagram illustrating a dishwasher connected to a water treatment apparatus according to an embodiment of the present disclosure.

FIG. 22 is a cross-sectional view of a dishwasher to which a water treatment apparatus according to an embodiment of the present disclosure is applied.

FIG. 23 is a diagram illustrating a water purifier to which a water treatment apparatus according to an embodiment of the present disclosure is applied.

[Modes of the Invention]

Hereinafter, various embodiments of the disclosure will be described with reference to the accompanying drawings. The various embodiments and the terms used herein are not intended to limit the technical features disclosed herein to specific embodiments, and should be understood to include various modifications, equivalents, and/or alternatives to the corresponding embodiments.

Like reference numerals refer to like elements throughout the description of the drawings.

The singular form of a noun corresponding to an item may include one item or a plurality of items unless the relevant context clearly indicates otherwise.

As used herein, the expressions "A or B", "at least one of A and B", "at least one of A or B", "A, B, or C", "at least one of A, B, and C", and "at least one of A, B, or C" may include A alone, B alone, C alone, or any combinations thereof.

The term "and/or" includes a combination of a plurality of associated listed elements or one element among the plurality of associated listed elements.

The terms "first", "second", or the like may be used herein to simply distinguish one element from another and do not limit the elements in another aspect (e.g., importance or order).

When an element (e.g., first element) is referred to as being "coupled" or "connected" to another element (second element) with or without the term "functionally" or "communicatively", the element may be connected directly (e.g., wiredly) to the another element or connected to the another element through yet another element (e.g., third element).

As used herein, it is to be understood that the terms such as "include", "have", or the like, are intended to indicate the existence of the features, numbers, operations, components, parts, and any combination thereof disclosed in the specification, and are not intended to preclude the possibility that one or more other features, numbers, operations, components, parts, and any combination thereof may exist or may be added.

When an element is referred to as being "connected to", "coupled to", "supported by", or "in contact with" another element, it may be directly connected to, coupled to, supported by, or in contact with the other element or indirectly connected to, coupled to, supported by, or in contact with the other element via a third element.

It will also be understood that when an element is referred to as being "on" another element, it can be directly on the other element, or intervening elements may also be present therebetween.

A water treatment apparatus according to various embodiments may purify contaminated water to a clean state. Water treatment apparatuses are used in wastewater treatment facilities, industrial processes, and water supply systems used in homes and offices playing an important role in environmental protection and human health. Clean water purified by a water treatment apparatus may be returned to nature or used for cleaning purposes, used as drinking water, or reused in industrial processes or the like.

According to various embodiments, the water treatment apparatus may include not only household water treatment apparatuses such as a water purifier or a water softener but also industrial water treatment apparatuses.

According to various embodiments, the water treatment apparatus may be provided inside a household electronic device such as a refrigerator, a washing machine, a dishwasher, or a water purifier.

For example, the water treatment apparatus may be provided inside a washing machine to remove impurities contained in water suppled into a drum of a washing machine discharged from the drum. Accordingly, not only washing performance may be improved, but also contaminated water after washing may be recycled so that efficient water recycling may be obtained.

It will be understood by those skilled in the art that the operation of the above-described water treatment apparatus provided in the washing machine may be applied in the same manner to a water treatment apparatus provided in other devices such as a refrigerator, a dishwasher, and a water purifier. The water treatment apparatus may purify contaminated water via various methods such as a biological treatment method, a chemical treatment method, and a physical treatment method.

A water treatment apparatus according to an embodiment may purify contaminated water via a capacitive deionization (CDI) method and an electrodeionization (EDI) method.

The capacitive deionization method refers to a method of removing ions of contaminated water using a principle that ions are adsorbed to and desorbed from the surfaces of electrodes by an electrical force generated between the electrodes. Throughout the specification, removing ions from contaminated water may include removing ionic substances of contaminated water.

A water treatment apparatus may include various components such as a plurality of pipes in which water flows, a plurality of values configured to control the flow of water, and a capacitive deionization module configured to purify water by a capacitive deionization method.

The capacitive deionization module may include a housing and electrodes and ion-exchange membranes provided in the housing. By a voltage applied to the electrodes, ions contained in water flowing into the housing may be adsorbed to the electrodes or desorbed from the electrodes.

According to various embodiments, a water treatment apparatus may further include a pre-treatment filter for pre-treatment of raw water supplied to the capacitive deionization module and/or a post-treatment filter for treatment of water purified by the capacitive deionization module again.

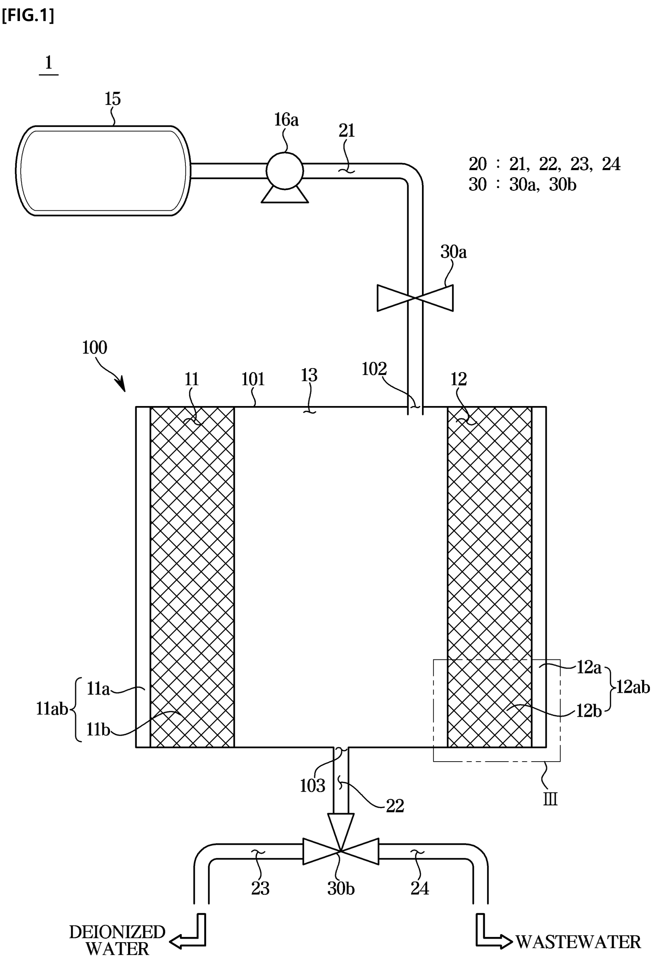

FIG. 1 illustrates an examples of a conceptual diagram of a water treatment apparatus according to an embodiment.

Referring to FIG. 1, a water treatment apparatus 1 according to an embodiment includes at least one capacitive deionization module including a first electrode, a second electrode, and a channel formed between the first electrode and the second electrode, wherein each of the first electrode and the second electrode includes a current collector and an active material layer disposed on one side of the current collector, wherein the active material layer includes: a plurality of pore structures including a plurality of carbon nanotubes; and a binder to fix the pore structures to the current collector, wherein the pore structure has a wide bottom-narrow top structure widening in a direction away from the current collector.

In addition, the water treatment apparatus 1 may include a CDI module 100, one or more flow paths 20 formed of pipes, and one or move valves 30 configured to control a flow of water in the one or more flow paths 20.

The CDI module 100 may include two electrodes (i.e., first electrode 11ab and second electrode 12ab) capable of adsorbing and desorbing ions upon application of a voltage during a deionization operation.

Each of the electrodes first electrode 11ab and the second electrode 12ab for a capacitive deionization apparatus according to the present disclosure may include a current collector and an active material layer (such as any of a first activation layer 11b and a second activation layer 12b) disposed on one side of the current collector, wherein the active material layer may include: a plurality of pore structures including a plurality of carbon nanotubes 111b and carbon nanotubes 121b; and a binder 112b and a binder 122b configured to fix the pore structures.

The first electrode 11ab and the second electrode 12ab may be located to face each other, and the first electrode 11ab and the second electrode 12ab located to face each other may constitute a capacitor.

The first electrode 11ab may include a first current collector 11a and a first activation layer 11b. The first electrode 11ab may serve as a positive electrode (anode) during a deionization operation of the water treatment apparatus 1 and serve as a negative electrode (cathode) during a regeneration operation, and the second electrode 12ab may serve as a negative electrode (cathode) during the deionization operation of the water treatment apparatus 1 and serve as a positive electrode (anode) during the regeneration operation.

The first current collector 11a may include an electrode plate electrically connected to a first pore structure. The electrode plate may include a metal plate and/or a non-metal plate.

The first current collector 11a may be formed of a conductive material. For example, the first current collector 11a may be formed of graphite, but the material of the first current collector 11a is not limited thereto.

The second electrode 12ab may include a second current collector 12a and a second activation layer 12b.

As to be described below, the second electrode 12ab may serve as a negative electrode (cathode) during a deionization operation of the water treatment apparatus 1 and serve as a positive electrode (anode) during a regeneration operation or a descaling operation.

The second current collector 12a may include an electrode plate electrically connected to a second pore structure 123b. The electrode plate may include a metal plate and/or a non-metal plate.

The second current collector 12a may be formed of the same material as that of the first current collector 11a.

However, on economic grounds, in an embodiment, different materials may be used to form the first current collector 11a and the second current collector 12a. For example, the material used to form the first current collector 11a may be selected from a transition metal, a transition metal oxide, a transition metal alloy, aluminum, an aluminum oxide, an aluminum alloy, graphene, and a catalytic oxide electrode (dimensionally stable anode (DSA)), and boron doped diamond (BDD) electrode), and the material used to form the second current collector 12a may be graphite.

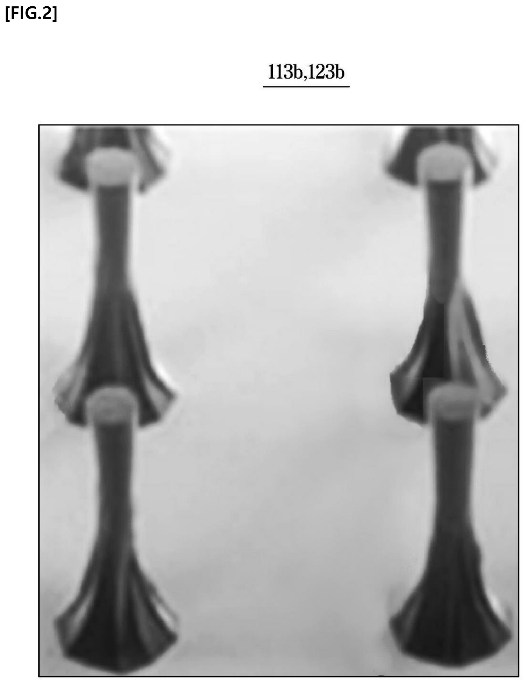

In the electrode for a capacitive deionization apparatus according to the present disclosure, the pore structure 113b and the pore structure 123b may have a wide bottom-narrow top structure widening in a direction away from the current collector as shown in FIGS. 2 to 4.

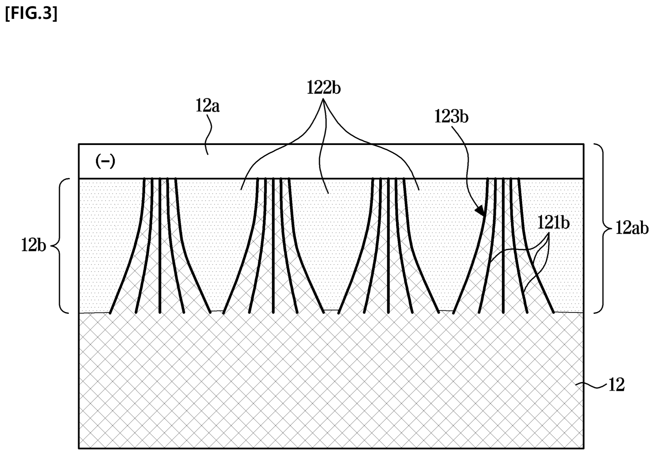

Upon receiving a voltage from an external powder source, the CDI electrode removes ions contained in introduced water by adsorbing the ions to the surfaces of the electrodes using electrostatic attraction. Because the ions are adsorbed to the electrode, more ions may be removed from a wider surface constituting an electrical double layer (EDL) is used, and thus porous carbonaceous materials such as activated carbon are widely used. However, as described above, a porous activated carbon electrode is merely a conductive material having fine pores (< 2 nm) randomly distributed therein. The present disclosure provides the first electrode 11ab and the second electrode 12ab including the pore structure 113b and the pore structure 123b including a plurality of carbon nanotubes (CNTs) condensed in a wide bottom-narrow top structure as shown in FIG. 3.

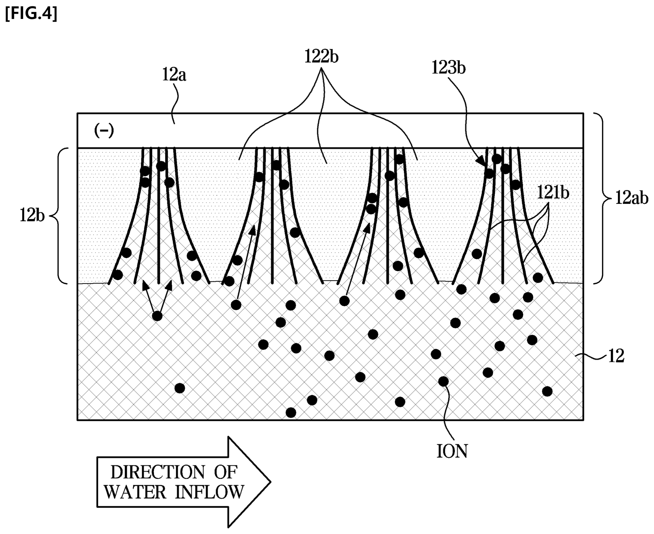

Referring to FIG. 4, the electrode is located such that wide areas of the carbon nanotubes are in contact with water flowing in. In this case, water may be introduced between strands of the carbon nanotubes by capillary force, and the strands of the plurality of carbon nanotubes are defined as the pore structure 113b and the pore structure 123b and space formed by the pore structure 113b and the pore structure 123b may be referred to as "pore" or "void". However, the structure is not limited to these terms but may be replaced with "void structure", "porous body", "ion adsorbent", "porous polymer", and the like and these terms may be replaced by any terms indicating a structure defining a space through which ions pass/to which ions are adsorbed by using a conductive polymer such as a plurality of carbon nanotubes.

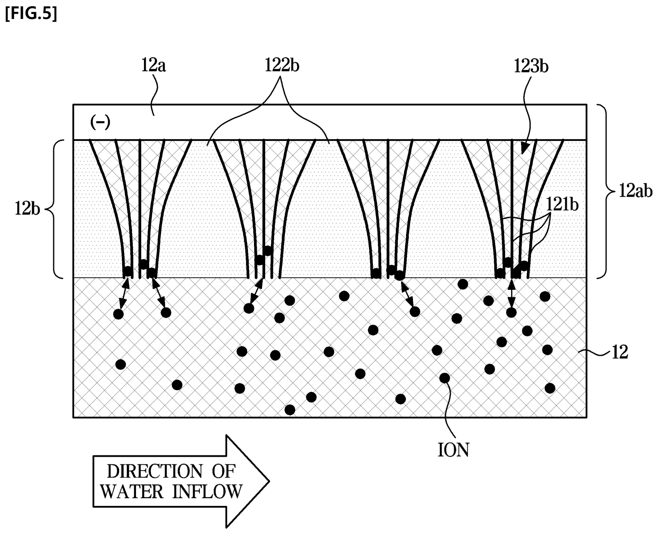

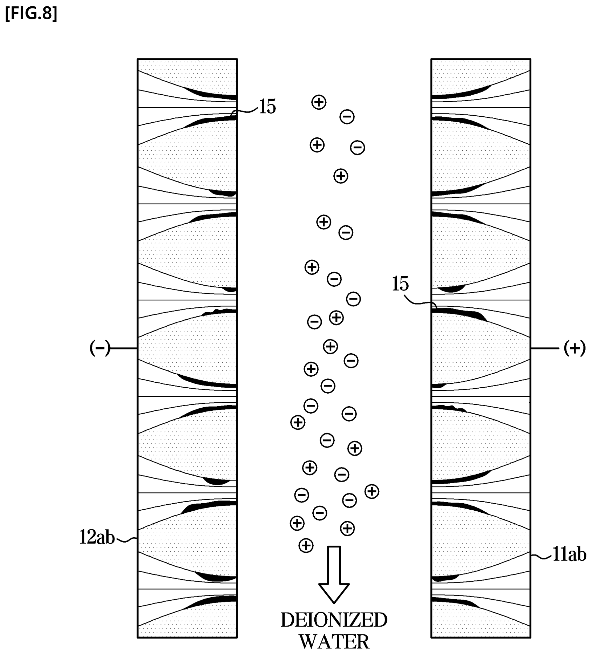

Because the sizes of pores decrease toward the inside of the active material layers (the first activation layer 11b and the second activation layer 12b) in the first electrode 11ab and the second electrode 12ab for a capacitive deionization apparatus including the pore structure 113b and the pore structure 123b having the wide bottom-narrow top shape, a path sufficient for further movement of ions adsorbed even to the outside of the electrodes into the inside may be effectively provided. Specifically, as the gap becomes narrower, the electric field generated by the external voltage increases to induce migration of ions, and ultimately ions are adsorbed on top of one another sequentially from an inner area of the pore of the electrode. Upon introduction of cations into the system as shown in FIG. 4, the cations move toward the electrode by the (-) voltage applied to the electrode. In this case, a clogging phenomenon caused by the ions does not occur although the cations are already adsorbed to the outermost area (the wide bottom area of the wide bottom-narrow top structure) of the pores structure of the electrode according to the present disclosure, and the co-ion repulsion caused by ions with the same polarity may be minimized, enabling smooth movement of the cations into the electrode and adsorption thereto, and thus adsorption of the ions may be performed on the entire surface of the electrode. However, in the case where the pore structure 113b and the pore structure 123b have a wide top-narrow bottom structure as shown in FIG. 5, a clogging phenomenon may occur due to the narrow inlet of the pore structure and the co-ion repulsion may occur due to ions with the same polarity, making movement and adsorption of ions into the electrode structure difficult. That is, deionization efficiency decreases, and accordingly, scales 17 are formed as shown in FIG. 8. Thus, it is difficult to remove ions, deionization efficiency further decreases, and a separate descaling process may be required.

Thus, in the electrode for a capacitive deionization apparatus according to the present disclosure, an average diameter of the uppermost region of the pore structure including the wide bottom-narrow top structure may be 40% to 60% of an average diameter of the lowermost region of the pore structure. However, the embodiment is not limited thereto, a diameter ratio of the uppermost region to the lowermost region may be adjusted according to intended purposes by using condensation of carbon nanotubes.

In addition, the electrode for a capacitive deionization apparatus according to the present disclosure, a gap between the carbon nanotubes at the uppermost region of the pore structure may be 0.594 nm or more. The gap and length of the carbon nanotubes may be determined according to size, and thickness of a deposited catalyst, and growth time. Therefore, an electrode for a capacitive deionization apparatus having desired pore distribution and specific surface area may be designed and manufactured. For example, the gap between carbon nanotubes needs to be adjusted, and the gap between the carbon nanotubes may allow three ions being adsorbed to pass therethrough even after condensation to minimize a pore-clogging phenomenon caused by the ions. Therefore, in the case of the negative electrode, in consideration of the diameter (0.198 nm) of $Ca^{2+}$ that is the largest cation, the gap between the carbon nanotubes at the uppermost region, the narrowest side of the pore structure, may be 0.594 nm or more.

In addition, the electrode for a capacitive deionization apparatus according to the present disclosure, the gap between the carbon nanotubes in the uppermost region of the pore structure may be 1.548 nm or more.

Specifically, in the case of the positive electrode, in consideration of the diameter (0.516 nm) of $SO_4^{2-}$ that is the largest anion, the gap between the carbon nanotubes at the uppermost region, the narrowest side of the pore structure, may be 1.548 nm or more.

In addition, in the electrode for a capacitive deionization apparatus according to the present disclosure, the carbon nanotubes may have a length of 20 $\mu$m to 300 $\mu$m. The length of the carbon nanotubes may be controlled to 20 $\mu$m to 300 $\mu$m for minimization of electrical resistance and optimization of deionization efficiency of the electrodes, and straightness of vertically oriented carbon nanotubes may be controlled by adjusting the amount of deposited metallic catalysts such as iron and aluminum.

In addition, in the electrode for a capacitive deionization apparatus according to the present disclosure, an outermost cross-section of the pore structure in a direction away from the current collector may satisfy Expression (1) below.

$$2.0 \leq \text{(sum of edge lengths of cross-section)/(area of cross-section)} \leq 2.3 \qquad \text{Expression (1):}$$

The intensity of the electric field needs to be optimized to effectively remove ions, and to this end, the shape of an outermost region of the pore structure may be adjusted. In the case of depositing a catalyst to grow carbon nanotubes, the catalyst may be adjusted to a shape (e.g., rectangular, circular, oval, and triangular shapes). By growing vertically oriented carbon nanotubes by using the catalyst and performing a condensation process, the pore structure of the condensed, vertically oriented carbon nanotubes maintained in with such a shape may be produced. By using this, the shape of the pores in contact with introducing water may be controlled while manufacturing the electrode of the capacitive deionization apparatus.

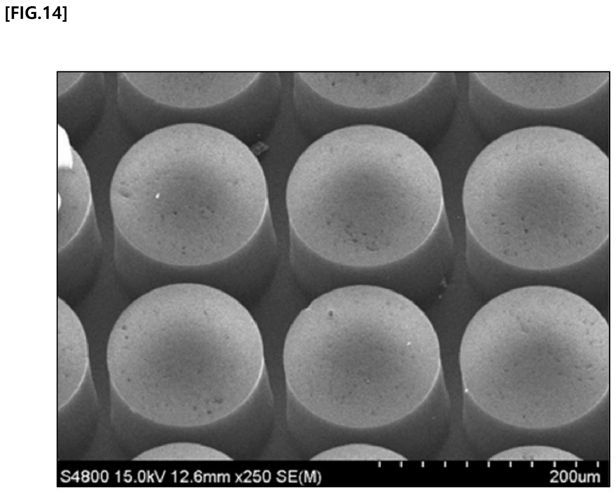

In an electric field between opposing plates in a side view, the center has the highest intensity and the intensity decreases toward edges, and thus a higher intensity of the electric field may be obtained with a lower number of edges. That is, this means that edges relative to area need to be decreased to maximize the electric field effect. Because a sum of edge lengths is equal to a length of an edge length of the electrode, a smaller ratio of edge lengths to area of a polygon may maximize the intensity of the electric field. A ratio of edges to area of a polygon decreases as the number of interior angles of the polygon increases and converges to 2 in the case of a circle. As the pattern of the carbon nanotube pore structure is closer to a circle, the electric field weakening effect caused by the electrode edges may be minimized. Therefore, as shown in FIG. 14, as the pattern of the pore structure is closer to a circle, the intensity of a magnetic field may be maximized by constituting the electrode by condensing the pore structure including the vertically oriented carbon nanotubes, preferably the outermost cross-section of the pore structure in a direction away from the current collector may satisfy Expression (1) below, and more preferably the (sum of edge lengths of cross-section)/(area of cross-section) ratio may be from 2.0 to 2.2, more preferably, from 2.0 to 2.1.

$$\text{Expression (1): } 2.0 \leq (\text{sum of edge lengths of cross-section})/(F) \leq 2.3$$

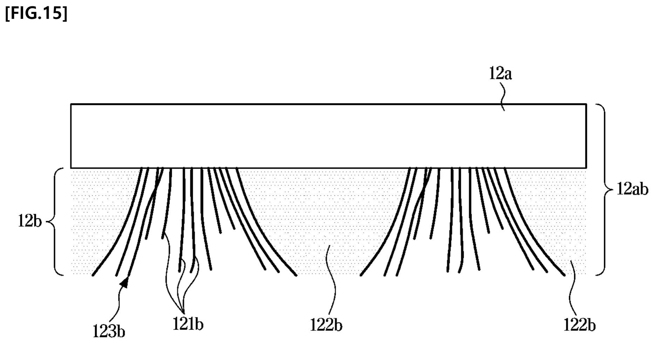

In addition, the electrode for a capacitive deionization apparatus according to the present disclosure may have a comb shape to enlarge a contact area of the pore structure with water. As the surface area of carbon nanotubes to which ions are adsorbed is enlarged, a contact area with water is enlarged to increase deionization efficiency. In terms of the surface area between two electrodes having the same length and facing each other, an electrode having a comb shape as shown in FIG. 15 has a larger surface area than a completely flat electrode. In the case of constituting electrodes with the same area, higher deionization performance may be obtained using a comb structure with the effects on enlarging the surface area, and thus the size of the module may be minimized and the number of stacked electrodes required to achieve the same performance may also be reduced. This may play an important role in reducing manufacturing costs of the electrode module.

In addition, in the electrode for a capacitive deionization apparatus according to the present disclosure, the binder may include at least one of polydimethylsiloxane (PDMS), styrene butadiene rubber (SBR), carboxy methyl cellulose (CMC), polytetrafluoroethylene (PTFE), and polyvinylidene fluoride (PDVF), and thus the structure of the electrode may be supported and delamination from the current collector may be minimized.

The CDI module 100 may further include a cation-exchange membrane configured to transmit only cations and an anion-exchange membrane configured to transmit only anions.

The water treatment apparatus 1 may include a housing 101 including a channel inlet 102 through which water is introduced, and an outlet 103 through which deionized water obtained by removing hardness components from the introduced water or wastewater obtained by dissolving the hardness components in the introduced water.

In an embodiment, at least one surface of the housing 101 may be formed of the current collectors (the first current collector 11a and the second current collector 12a). However, at least one surface of the housing 101 may be formed of a pad configured to support the current collectors (the first current collector 11a and the second current collector 12a).

In an embodiment, the housing 101 may include a channel inlet 102 through which water is introduced into a channel 13 and an outlet 103 through which deionized water or wastewater contained in the channel 13 is discharged.

Through the channel inlet 102, water may be introduced into the channel 13 from the outside of the CDI module 100. Through the outlet 103, water contained in the channel 13 may be discharged out of the CDI module 100.

The water treatment apparatus 1 may store raw water or include a water source 15 configured to supply raw water received from the outside. Raw water may include water to be treated by the water treatment apparatus 1.

The water treatment apparatus 1 may include a pump 16a configured to pump external water (e.g., water supplied from the water source).

The water treatment apparatus 1 may include one or more flow paths 20 and one or more valves 30. The one or more flow paths 20 may be branched by one or more valves 30.

Water pumped by the pump 16a may flow into the flow paths 20 of the water treatment apparatus 1.

In an embodiment, external water may be pumped by the pump 16a to flow into a first flow path 21. The first flow path 21 may be configured to introduce external water.

The first flow path 21 may be connected to the channel inlet 102.

A first flow path valve 30a may open and close the first flow path 21. The first flow path valve 30a may block or allow the flow of water from the first flow path 21 to the channel 13.

Water flowing into the channel 13 through the first flow path 21 may be discharged to a second flow path 22. The second flow path 22 may be connected to the channel outlet 103.

The second flow path valve 30b may control water flowing in the second flow path 22 to flow into a third flow path 23 or a fourth flow path 24. That is, the second flow path valve 30b may control water discharged out of the channel 13 to flow into the third flow path 23 or the fourth flow path 24. In an embodiment, the second flow path valve 30b may close the second flow path 22 to control water flowing in the second flow path 22 not to flow into the third flow path 23 or the fourth flow path 24.

The third flow path 23 may include a flow path through which purified water (or deionized water) is discharged. The fourth flow path 24 may include a flow path through which contaminated water (or wastewater) is discharged.

According to various embodiments, the number of the channel inlet 102, the number of the channel outlet 103, the type of the flow path 20, and/or the type of the valve 30 are not limited to those illustrated in FIG. 1.

According to various embodiments, the water treatment apparatus 1 may include at least one CDI module 100.

In this regard, the plurality of CDI modules 100 may be implemented by preparing a capacitor including two monopolar electrodes (e.g., the first electrode 11ab and the second electrode 12ab) serving as a negative electrode or a positive electrode, and connecting the plurality of CDI modules 100 in series or parallel to each other. In addition, the plurality of CDI modules 100 may also be implemented in the form where bipolar electrodes are stacked to be spaced apart from each other.

In the case of including a plurality of CDI modules 100, a spacer to obtain space between the CDI modules 100 may further be included therein.

Cations may be adsorbed to the second electrode 12ab by applying a negative charge to the second current collector 12a, and anions may be adsorbed to the first electrode 11ab by applying a positive charge to the first current collector 11a. In other words, the cations may be stored in the second electrode 12ab, and the anions may be stored in the first electrode 11ab.

Accordingly, as cations dissolved in water are adsorbed to (stored in) the pore structure, water from which cations are removed (i.e., deionized water) may be produced. In other words, the deionization operation may refer to an operation of performing deionization reaction to remove cations contained in water flowing into the CDI module 100 through the inlet 102 and discharging the deionized water from which ions are removed out of the CDI module 100.

The cations adsorbed to the second electrode 12ab by applying a positive charge to the second current collector 12a may be desorbed from the second electrode 12ab, and anions adsorbed to the first electrode 11ab may be desorbed from the first electrode 11ab.

Accordingly, the cations desorbed from the second electrode 12ab and anions desorbed from the first electrode 11ab may be dissolved in water flowing into the channel inlet 102 such that the first electrode 11ab and the second electrode 12ab may be regenerated into a state capable of adsorbing ions again.

In addition, water in which ions desorbed from the first electrode 11ab and the second electrode 12ab are dissolved, i.e., wastewater, is produced.

That is, the regeneration operation may refer to an operation of performing deionization to desorb the cations adsorbed to the second electrode 12ab used as a negative electrode in the deionization operation, moving the desorbed cations to the channel 13, and discharging wastewater containing a large number of cations out of the CDI module 100 through the outlet 103.

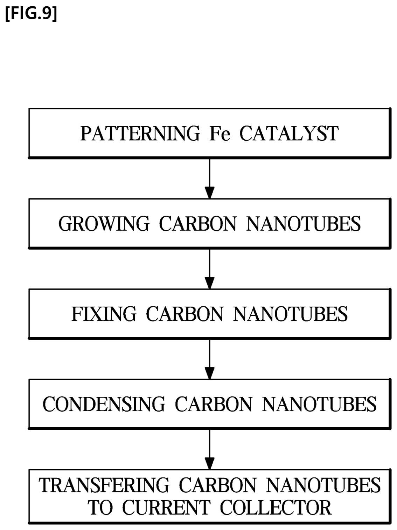

Hereinafter, a method of manufacturing an electrode for a capacitive deionization apparatus will be described, and FIG. 9 shows a flowchart 900 of the method.

A method of manufacturing an electrode for a capacitive deionization apparatus according to the present disclosure may include: depositing a Fe catalyst on a surface of a silicon substrate by patterning at S901; growing carbon nanotubes by applying a carbon source gas to the deposited Fe catalyst at S902; fixing the grown carbon nanotubes to the silicon substrate by a binder at S903; condensing the carbon nanotubes to form a pore structure having a wide top-narrow bottom structure narrowing in a direction away from the silicon substrate at S904;

and forming a pore structure having a wide bottom-narrow top structure widening in a direction away from a current collector by transferring the condensed carbon nanotubes onto a surface of the current collector coated with a second binder at S905. By the method, the carbon nanotubes may grow to be vertically oriented and the pore size decreases inward an active material layer, and thus a pore structure having a wide bottom-narrow top structure effectively providing a path sufficient for additional migration of ions even if adsorbed to the outside of the electrode.

In addition, in the method of manufacturing an electrode for a capacitive deionization apparatus according to the present disclosure, the depositing of the Fe catalyst by patterning may include: forming a photoresist layer (PR layer) on the surface of the Si substrate by depositing a photoresist substance thereon; depositing the Fe catalyst by forming a hole-shaped structure by patterning the photoresist layer; and etching the photoresist layer.

First, the photoresist substance is deposited on the surface of the Si substrate to form the photoresist layer (PR Layer), and then the hole-shaped structure is formed in the photoresist layer by masking and light exposure processes. Subsequently, the Fe catalyst is deposited to grow the carbon nanotubes, and the photoresist layer is etched to remove other materials except for the Fe catalyst directly deposited on the Si substrate.

Also, the method of manufacturing an electrode for a capacitive deionization apparatus according to the present disclosure may further include depositing an Al catalyst before depositing the Fe catalyst. Al, as a buffer layer, may be used to prevent reaction between Fe and the Si wafer.

Also, in the method of manufacturing an electrode for a capacitive deionization apparatus according to the present disclosure, the growing of the carbon nanotubes at S902 may include applying acetylene ($C_2H_2$) gas thereto for 10 seconds to 120 second. The thickness of the active material layer of 20 $\mu$m to 300 $\mu$m may minimize electrical resistance and optimize deionization efficiency of the electrode, and the acetylene ($C_2H_2$) gas may be applied for 10 seconds to 120 seconds to grow the carbon nanotubes to the length range. As a carbon source for growing the carbon nanotubes, hydrocarbon gases such as methane ($CH_4$), ethylene ($C_2H_4$), and acetylene ($C_2H_2$) may be used, but are not limited thereto.

In addition, in the method of manufacturing an electrode for a capacitive deionization apparatus according to the present disclosure, the first binder and the second binder may include at least one selected from polydimethylsiloxane (PDMS), styrene butadiene rubber (SBR), carboxy methyl cellulose (CMC), polytetrafluoroethylene (PTFE), and polyvinylidene fluoride (PDVF), respectively, and thus the structure of the electrode may be supported and delamination from the current collector may be minimized. For example, PDMS may be used as the binders. In this regard, the first binder and the second binder may be the same binder or different from each other, and for example, both the first binder and the second binder may be PDMS. In the case of using PDMS as the binder, a PDMS polymer solution may be prepared by mixing a PDMS resin and a hardener in a mass ratio of 10:1, and mixing the mixed PDMS solution and hexane in a volume ratio of 1:1.

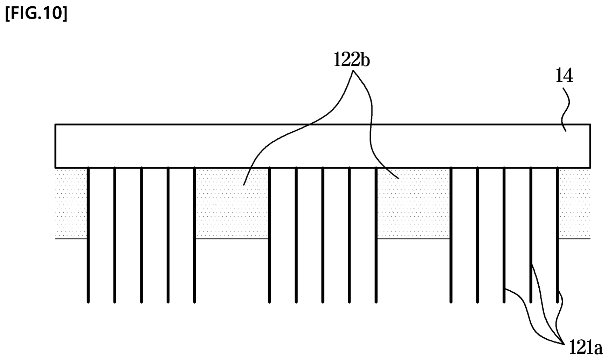

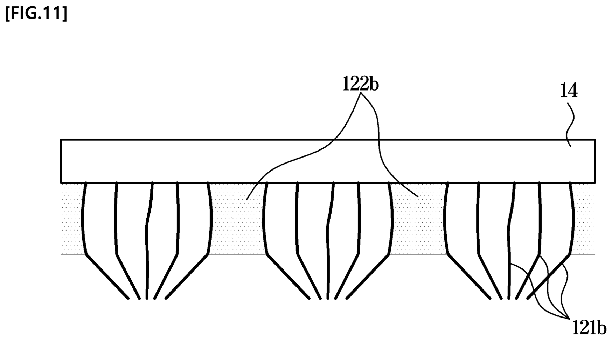

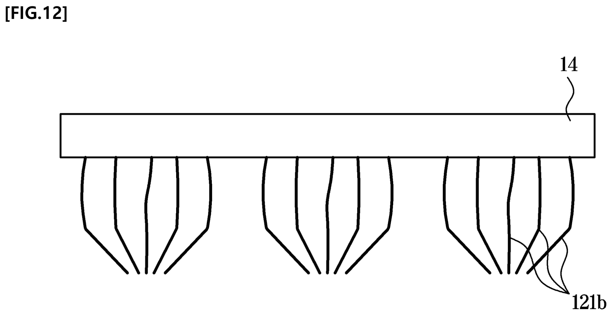

In addition, in the method of manufacturing an electrode for a capacitive deionization apparatus according to the present disclosure, the condensing of the carbon nanotubes to form a pore structure having a wide top-narrow bottom structure may include condensing an area, in which the carbon nanotubes are not bound to the first binder, by exposing the Si substrate, to which the carbon nanotubes are fixed by the first binder, to 50 wt% or less of acetone or ethanol vapor for 30 seconds or less, and forming a pore structure having a wide bottom-narrow top structure narrowing in a direction away from the Si substrate. First, as shown in FIG. 10, the binder 122b fixes the carbon nanotubes 121a to the Si substrate 14 to a certain height. Then, the carbon nanotubes are condensed by exposure to evaporation of a volatile solvent. As the volatile solvent, for example, 50 wt% or less of acetone or ethanol vapor may be used for 30 seconds or less. In this regard, although portions of the carbon nanotubes filled with the binder are not condensed due to the fixing effect of the binder 122b, other portions not filled with the binder 122b are condensed. Thus, by adjusting the portions, as shown in FIG. 11, the pore structure having a wide top-narrow bottom structure narrowing in a direction away from the Si substrate 14 may be formed. Then, the binder 122b may be removed by a reactive ion etching process, and a shape from which the binder 122b is removed is as shown in FIG. 12.

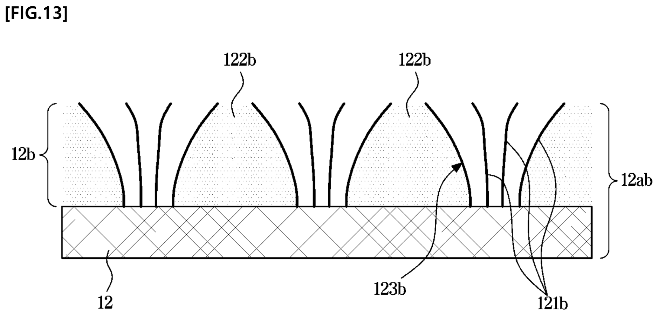

The transferring may include transferring the condensed carbon nanotubes to the current collector coated with the binder, for example, mixing a PDMS resin and a hardener in a weight ratio of 10:1, mixing the mixed PDMS solution and hexane in a volume ration of 1:1, applying the mixture to the current collector by spin-coating, and transferring the condensed carbon nanotubes to the surface of the current collector to which the binder is spin-coated. Thereby, the pore structure having a wide bottom-narrow top structure widening in a direction away from the current collector may be formed as shown in FIG. 13.

In addition, in the method of manufacturing an electrode for a capacitive deionization apparatus according to the present disclosure, the depositing of the Fe catalyst by patterning may include controlling the shape of the deposited Fe catalyst. With regard to the controlled shape of the Fe catalyst, the outermost cross-section may satisfy Expression (1) below.

$2.0 \leq$ (sum of edge lengths of cross-section)/(area of cross-section) $\leq 2.3$          Expression (1):

As the pattern of the pore structure is closer to a circle, the intensity of a magnetic field may be maximized by constituting the electrode by condensing the vertically oriented carbon nanotubes, preferably the outermost cross-section of the pore structure in a direction away from the current collector may satisfy Expression (1) below, and more preferably the (sum of edge lengths of cross-section)/(area of cross-section) ratio may be from 2.0 to 2.2, more preferably, from 2.0 to 2.1.

In addition, in the method of manufacturing an electrode for a capacitive deionization apparatus according to the present disclosure, the growing of the carbon nanotubes may include forming a comb shape by growing the carbon nanotubes to have different lengths by depositing the Fe catalyst on the surface of the Si substrate including a plurality of grooves. As the surface area of carbon nanotubes to which ions are adsorbed is enlarged, a contact area with water is enlarged to increase deionization efficiency. Thus, the pore structure may have a com shape to enlarge the contact area with water.

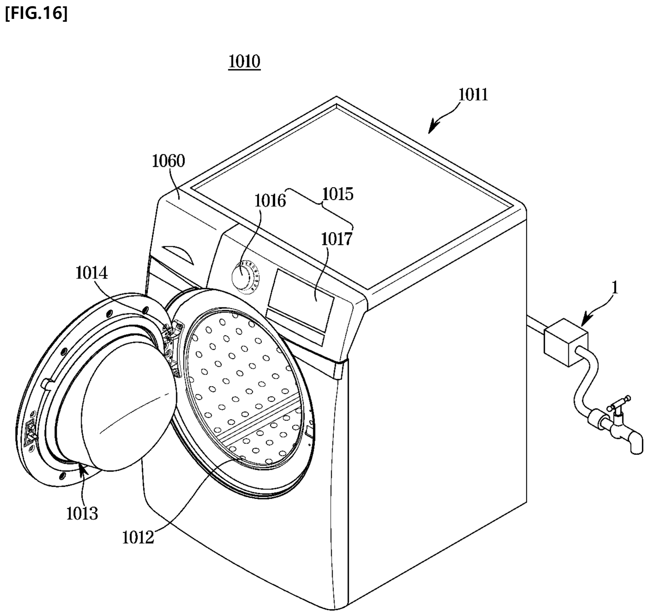

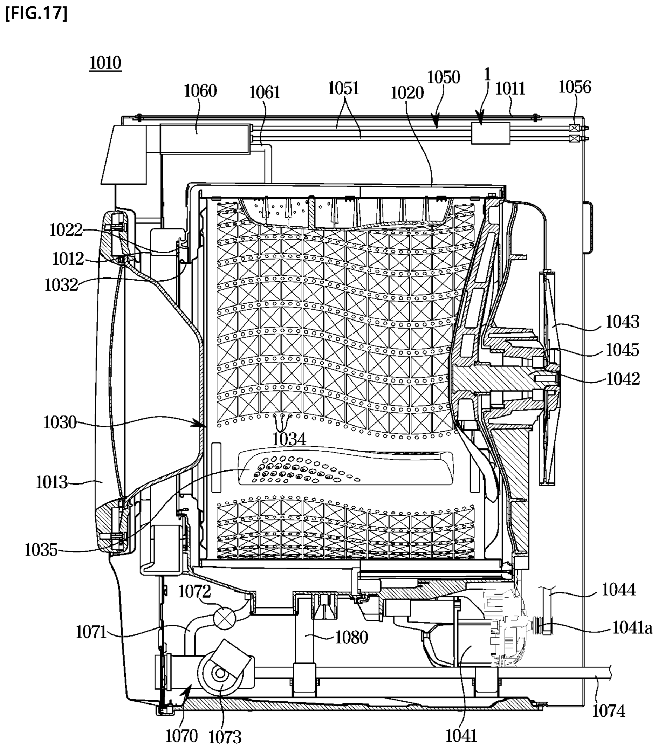

FIG. 16 illustrates a washing machine connected to a water treatment apparatus according to an embodiment of the present disclosure. FIG. 17 illustrates a cross-section of a washing machine to which a water treatment apparatus according to an embodiment of the present disclosure is applied.

Referring to FIGS. 16 and 17, a washing machine 1010 to which the water treatment apparatus according to an embodiment of the present disclosure is connected and/or applied will be described.

The washing machine 1010 may include a washing machine housing 1011 configured to accommodate various components therein. The washing machine housing 1011 may define an exterior appearance of the washing machine 1010. The washing machine housing 1011 may have a box shape with one open side.

The washing machine housing 1011 may have a housing opening 1012 formed to allow access to the inside of a drum 1030. The housing opening 1012 may be open approximately forward.

The washing machine 1010 may include a door 1013 configured to open and close the hosing opening 1012 formed in the washing machine housing 1011. The door 1013 may be pivotally coupled to the washing machine housing 1011 by using a hinge 1014. At least a portion of the door 1013 may be transparent or translucent so that the inside of the washing machine housing 1011 is visible.

The washing machine 1010 may include a tub 1020 provided in the washing machine housing 1011 to store water. The tub 1020 may be located in the washing machine housing 1011. The tub 1020 may have a tub opening 1022 provided to correspond to the housing opening 1012. The tub opening 1022 may be open approximately forward. The tub 1020 may be supported in the washing machine housing 1011. The tub 1020 may have an approximately cylindrical shape with one open side.

The tub 1020 may be elastically supported by the washing machine housing 1011 via a damper 1080. The damper 1080 may connect the washing machine housing 1011 with the tub 1020. The damper 1080 may absorb vibration energy between the tub 1020 and the washing machine housing 1011 while vibration generated during rotation of the drum 1030 is transmitted to the tub 1020 and/or the washing machine housing 1011, thereby attenuating the vibration transmitted thereto.

The washing machine 1010 may include a drum 1030 provided to contain laundry. The drum 1030 may be provided to be rotatable in the tub 1020. The drum 1030 may perform washing, rinsing, and/or spin-drying operations while rotating in the tub 1020. The drum 1030 may include through-holes 1034 connecting the interior space of the drum 1030 with the interior space of the tub 1020. The drum 1030 may have an approximately cylindrical shape with one open side. At least one lifter 1035 may be installed at an inner peripheral surface of the drum 1030 such that laundry is raised and dropped during rotation of the drum 1030.

The drum 1030 may have a drum opening 1032 provided to correspond to the housing opening 1012 and the tub opening 1022. The laundry may be introduced into the drum 1030 and withdrawn from the drum 1030 through the housing opening 1012, the tub opening 1022, and the drum opening 1032.

The washing machine 1010 may include a washing machine drive device 1040 configured to rotate the drum 1030. The washing machine drive device 1040 may include a drive motor 1041, and a rotary shaft 1042 configured to transmit a driving force generated by the drive motor 1041 to the drum 1030. The rotary shaft 1042 may pass through the tub 1020 to be connected to the drum 1030.

The washing machines 1010 may be classified into a direct driving type in which the rotary shaft 1042 is directly connected to the drive motor 1041 to rotate the drum 1030 and an indirect driving type in which the rotary shaft 1042 is connected to the drive motor 1041 via a pulley 1043 to rotate the drum 1030.

The washing machine 1010 according to an embodiment may be provided as the indirect driving type, but is not limited thereto, and may also be provided as the direct driving type.

One end of the rotary shaft 1042 may be connected to the drum 1030, and the other end may be connected to the pulley 1043 to receive a drive power from the drive motor 1041. A motor pulley 1041a may be provided at a rotation shaft of the drive motor 1041. A drive belt 1044 may be provided between the motor pulley 1041a and the pulley 1043 and the rotary shaft 1042 may be driven by the drive belt 1044.

A bearing housing 1045 configured to rotatably support the rotary shaft 1042 may be installed at a rear region of the tub 1020. The bearing housing 1045 may be formed of an aluminum alloy and may be inserted into the rear region of the tub 1020 while the tub 1020 is injection molded.

The washing machine drive device 1040 may be provided to perform the washing, rinsing, and/or spin-drying, or drying operation by rotating the drum 1030 in the forward direction and the reverse direction.

The washing machine 1010 may include a water supply device 1050. The water supply device 1050 may supply water to the tub 1020. The water supply device 1050 may be disposed above the tub 1020. The water supply device 1050 may include a water supply pipe 1051 and a water supply valve 1056 provided at the water supply pipe 1051. The water supply pipe 1051 may be connected to an external water source. The water supply pipe 1051 may extend from the external water source to a detergent supply device 1060 and/or the tub 1020. Water may be supplied to the tub 1020 via the detergent supply device 1060. Water may be supplied to the tub 1020 without passing through the detergent supply device 1060.

The water supply valve 1056 may open or close the water supply pipe 1051 in response to an electrical signal of the controller. The water supply valve 1056 may allow or block the supply of water from the external water source to the tub 1020. The water supply valve 1056 may include, for example, a solenoid valve open and closed in response to an electrical signal.

The washing machine 1010 may include the detergent supply device 1060 configured to supply a detergent to the tub 1020. The detergent supply device 1060 may be configured to supply a detergent into the tub 1020 during a water supply process. Water supplied through the water supply pipe 1051 may pass through the detergent supply device 1060 to be mixed with the detergent. Water mixed with the detergent may be supplied into the tub 1020. The detergent may include not only laundry detergents but also rinses, deodorizers, disinfectants, or fragrances for a dryer. The detergent supply device 1060 may be connected to the tub 1020 via the connection pipe 1061.

The washing machine 1010 may include a drain device 1070. The drain device 1070 may be configured to discharge water contained in the tub 1020 to the outside. The drain device 1070 may include a drain pump 1073 configured to discharge water of the tub 1020 out of the washing machine housing 1011, a connection hose 1071 connecting the tub 1020 with the drain pump 1073 such that water contained in the tub 1020 is introduced into the drain pump 1073, and a drain hose 1074 to guide the water pumped by the drain pump 1073 out of the washing machine housing 1011. The drain device 1070 may include a drain valve 1072 provided at the connection hose 1071 to open and close the connection hose 1071.

The washing machine 1010 may provide a user interface device 1015 for interaction between a user and the washing machine 1010.

The washing machine 1010 may include at least one user interface device 1015. The user interface device 1015 may include at least one input interface 1016 and at least one output interface 1017.

The at least one input interface 1016 may convert sensory information received from the user into an electrical signal.

The at least one input interface 1016 may include a power button, an operation button, a course select dial (or course select button), and a washing/rinsing/spin-drying setting button. The at least one input interface 1016 may include, for example, a tact switch, a push switch, a slide switch, a toggle switch, a micro switch, a touch switch, a touch pad, a touch screen, a jog dial, and/or a microphone.

The at least one output interface 1017 may transmit various data related the operation of the washing machine 1010 to the user by generating sensory information.

For example, the at least one output interface 1017 may transmit information related to the washing course, the operation time of the washing machine 1010, and washing setting/rinsing setting/spin-drying setting-related information to the user. Information related to the operation of the washing machine 1010 may be output through a screen, indicator, voice, or the like. The at least one output interface 1017 may include, for example, a liquid crystal display (LCD) panel, a light emitting diode (LED) panel, a speaker, and the like.

The water treatment apparatus 1 according to various embodiments may be provided to remove ions from water supplied to the washing machine 1010.

For example, the water treatment apparatus 1 may be located outside the washing machine 1010 as shown in FIG. 16. The water treatment apparatus 1 may be located at a position outside the washing machine 1010 and configured to remove ions from water supplied to the washing machine 1010 supplied to the washing machine 1010. The water treatment apparatus 1 may be provided at a flow path connecting an external water source and the washing machine 1010.

For example, the water treatment apparatus 1 may be located inside the washing machine 1010 as shown in FIG. 17. The water treatment apparatus 1 may be connected to the water supply pipe 1051. For example, the first flow path 21 of the capacitive deionization module 100 may be connected to the water supply pipe 1051. The water treatment apparatus 1 may be configured to remove ions from water flowing in the water supply pipe 1051. A position of the water treatment apparatus 1 is not limited to the water supply pipe 1051, and the water treatment apparatus 1 may be provided at various positions where water supplied to the washing machine 1010 pass.

The water treatment apparatus 1 according to various embodiments may be located outside and/or inside the washing machine 1010.

The water treatment apparatus 1 may perform a deionization operation during a water supply cycle of the washing machine 1010. In an embodiment, the washing machine 1010 may transmit a water supply initiation signal to the water treatment apparatus 1 upon determination that conditions for initiating the water supply cycle are satisfied. The water treatment apparatus 1 may perform the deionization operation in response to receiving the water supply initiation signal from the washing machine 1010.

The water treatment apparatus 1 may perform a regeneration operation in response to termination of the water supply cycle of the washing machine 1010. In an embodiment, the washing machine 1010 may transmit a water supply termination signal to the water treatment apparatus 1 upon determination that conditions for stopping the water supply cycle are satisfied. The water treatment apparatus 1 may perform the regeneration operation in response to receiving the water supply termination signal from the washing machine 1010.

Upon determination that conditions for a descaling operation, the water treatment apparatus 1 may perform the descaling operation while the washing machine 1010 does not perform the water supply cycle.

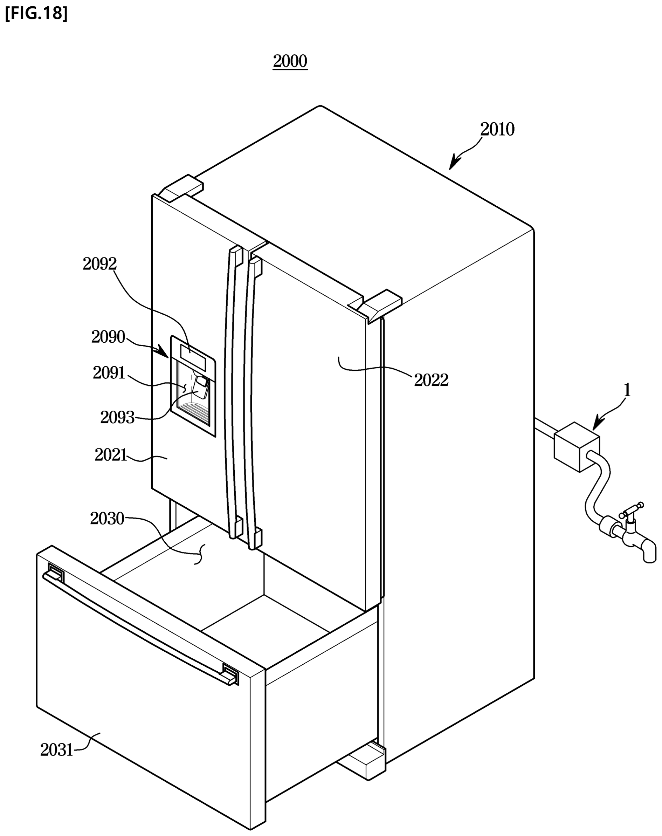

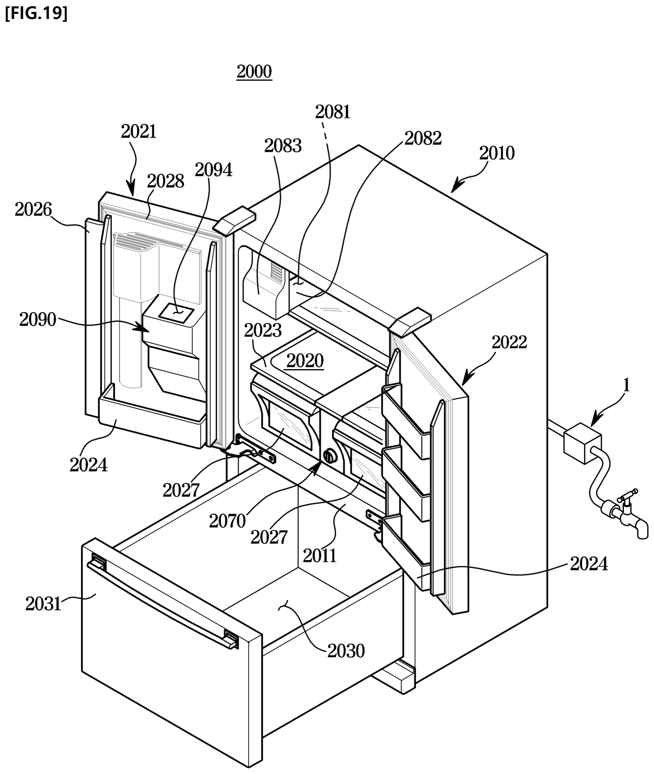

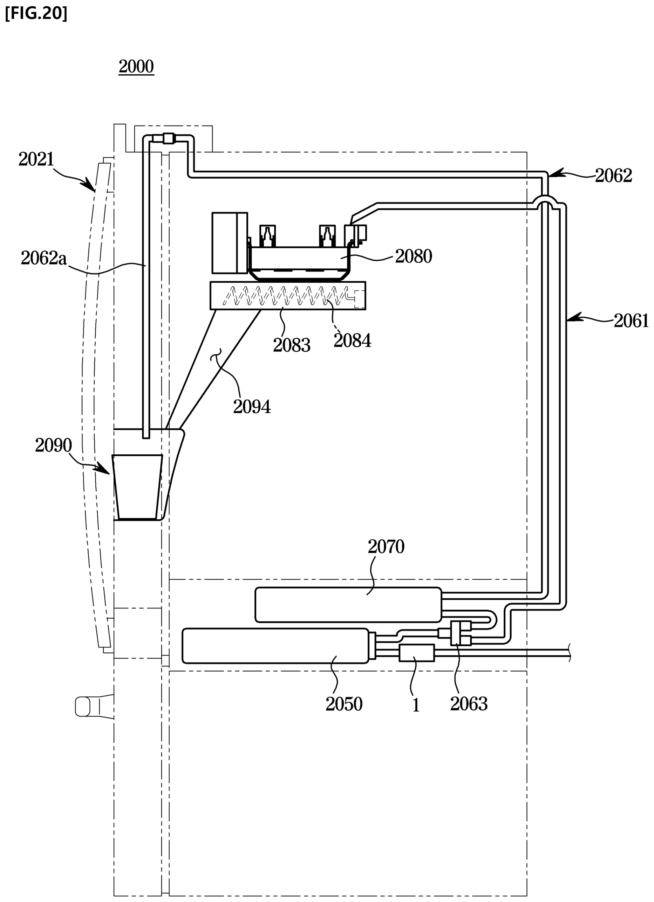

FIG. 18 illustrates a refrigerator connected to a water treatment apparatus according to an embodiment of the present disclosure. FIG. 19 illustrates a state where a door of a refrigerator connected to the water treatment apparatus according to an embodiment of the present disclosure is open. FIG. 20 illustrates a cross-section of a refrigerator to which a water treatment apparatus according to an embodiment of the present disclosure is applied.

Referring to FIGS. 18 to 20, a refrigerator 2000 to which the water treatment apparatus 1 according to an embodiment of the present disclosure is connected and/or applied will be described.

The refrigerator 2000 according to an embodiment may include a main body 2010.

The main body 2010 may include an inner cabinet, an outer cabinet located outside the inner cabinet, and an insulation material disposed between the inner cabinet and the outer cabinet.

The inner cabinet may include at least one of a case, a plate, a panel, or a liner constituting storage compartments (storage compartment 2020 and storage compartment 2030). The inner cabinet may be formed as one body or as an assembly of a plurality of plates. The outer cabinet may define an exterior appearance of a main body and may be coupled to outer sides of the inner cabinet such that the insulation material is disposed between the inner cabinet and the outer cabinet.

The insulation material may insulate the inside of the storage compartments (storage compartment 2020 and storage compartment 2030) and the outside of the storage compartments (storage compartment 2020 and storage compartment 2030) such that the temperature inside the storage compartments (storage compartment 2020 and storage compartment 2030) may be maintained at a previously set appropriate temperature without being affected by an external environment. According to an embodiment, the insulation material may include a foam insulation material. The foam insulation material may be formed by injecting and blowing urethane foam including polyurethane and a blowing agent into space between the inner cabinet and the outer cabinet.

According to an embodiment, the insulation material may further include a vacuum insulation material in addition to the foam insulation material or the insulation material may be formed of only the vacuum insulation material instead of the foam insulation material. The vacuum insulation material may include a core material and an outer shell material that accommodates the core material and seals the interior with a vacuum or a near-vacuum pressure. However, the insulation material is not limited to the above-described foam insulation material or vacuum insulation material but may include various other materials available for insulation.

The storage compartments (storage compartment 2020 and storage compartment 2030) may include a space limited by the inner cabinet. The storage compartments (storage compartment 2020 and storage compartment 2030) may further include an inner cabinet defining a space corresponding to the storage compartments (storage compartment 2020 and storage compartment 2030). The storage compartments (storage compartment 2020 and storage compartment 2030) may store various items such as food, medicine, and cosmetics and may be formed to have one open side for loading and unloading the items.

The refrigerator 2000 may include one or more storage compartments 2020 and 2030. In the case where the refrigerator 2000 includes two or more storage compartments 2020 and 2030, each of the storage compartments (storage compartment 2020 and storage compartment 2030) may have different uses and be maintained at different temperatures. To this end, each of the storage compartments (storage compartment 2020 and storage compartment 2030) may be partitioned by a barrier wall 2011 including an insulation material.

The storage compartments (storage compartment 2020 and storage compartment 2030) may be provided at an appropriate temperature range according to the use thereof and may include a refrigerator compartment, a freezer compartment, or a temperature-viable compartment classified according to the use and/or temperature range. The refrigerator compartment may be maintained at a temperature appropriate for storing items under refrigeration, and the freezer compartment may be maintained at a temperature appropriate for storing items in a frozen state. Refrigeration may mean keeping items in a chilled state without being frozen, and for example, the refrigerator compartment may be maintained in a temperature range of 0 degrees Celsius to 7 degrees Celsius. Freezing may mean cooling items to be frozen or to be kept in a frozen state, and for example, the freezer compartment may be maintained in a temperature range of -20 degrees Celsius to -1 degrees Celsius. The temperature-variable compartment may be used as either the refrigerator compartment or the freezer compartment by selection of the user or regardless thereof.

The storage compartments (storage compartment 2020 and storage compartment 2030) may also be called by various names such as vegetable compartment, fresh compartment, cooling compartment, and ice-making compartment in addition to the refrigerator compartment, the freezer compartment, and the temperature-variable compartment. The terms such as the refrigerator compartment, the freezer compartment, and the temperature-variable compartment used hereinafter should be understood as encompassing the storage compartments (storage compartment 2020 and storage compartment 2030) each having corresponding uses and temperature ranges.

The storage compartments (storage compartment 2020 and storage compartment 2030) may include shelves 2023 to place food thereon and at least one storage box 2027 to store food in a sealed state.

According to an embodiment, the refrigerator 2000 may include one or more doors (door 2021, door 2022, and door 2031) configured to open and close one open side of the storage compartments 2020 and 2030. The doors (door 2021, door 2022, and door 2031) may be provided to open and close each of the one or more storage compartments (storage compartment 2020 and storage compartment 2030) or one of the doors (door 2021, door 2022, and door 2031) may be provided to open and close the plurality of storage compartments 2020 and 2030. The doors (door 2021, door 2022, and door 2031) may be rotatably or slidably installed on the front of the main body 2010.

The doors (door 2021, door 2022, and door 2031) may be configured to seal the storage compartments (storage compartment 2020 and storage compartment 2030) while the doors (door 2021, door 2022, and door 2031) are closed. The doors (door 2021, door 2022, and door 2031), like the main body 2010, may include an insulation material to insulate the storage compartments (storage compartment 2020 and storage compartment 2030) while the doors (door 2021, door 2022, and door 2031) are closed.

According to an embodiment, the doors (door 2021, door 2022, and door 2031) may include a door exterior plate constituting the front of the doors (door 2021, door 2022, and door 2031), a door interior plate constituting the rear of the doors (door 2021, door 2022, and door 2031) and facing the storage compartments (storage compartment 2020 and storage compartment 2030), an upper cap, a lower cap, and a door insulation material provided thereinside.

A gasket 2028 may be provided on the rim of the door interior plate to be in close contact with the main body 2010, thereby sealing the storage compartments (storage compartment 2020 and storage compartment 2030) while the doors (door 2021, door 2022, and door 2031) are closed. The door inner plate may include a dyke 2025 protruding backward such that a door basket 2024 for storing items may be mounted thereto.

According to an embodiment, in the case where one storage compartment 2020 is open and closed by two doors (door 2021 and door 2022), the refrigerator 2000 may include a rotary bar 2026 to control cooling air of the storage compartment 2020 by sealing a gap between the two doors (door 2021 and door 2022).

According to an embodiment, the doors (door 2021, door 2022, and door 2031) may include a door body, and a front panel detachably coupled to the front of the door body and constituting the front of the door. The door body may include a door exterior plate constituting the front of the door body, a door interior plate defining the rear of the door body and facing the storage compartment, an upper cap, a lower cap, and a door insulation material provided thereinside.

The refrigerator 2000 may be classified into French door type, side-by-side type, bottom mounted freezer (BMF), top mounted freezer (TMF), or one door refrigerator according to arrangement of the doors (door 2021, door 2022, and door 2031) and the storage compartments (storage compartment 2020 and storage compartment 2030).

According to an embodiment, the refrigerator 2000 may include a cooling air supply device configured to supply cooling air to the storage compartments (storage compartment 2020 and storage compartment 2030).

The cooling air supply device may include a machine, an instrument, an electronic device, and/or a combined system thereof configured to cool the storage compartments (storage compartment 2020 and storage compartment 2030) by generating and guiding cooling air.

According to an embodiment, the cooling air supply device may generate cooling air via a refrigeration cycle including compression, condensation, expansion, and evaporation processes of a refrigerant. To this end, the cooling air supply device may include a refrigeration cycle device including a compressor, a condenser, an expansion device, and an evaporator capable of driving the refrigeration cycle. According to an embodiment, the cooling air supply device may include a semiconductor such as a thermoelectric element. The thermoelectric element may cool the storage compartments (storage compartment 2020 and storage compartment 2030) by heating and cooling operations by the Peltier effect.

According to an embodiment, the refrigerator 2000 may include a machine room in which at least some parts of the cooling air supply device are located.

The machine room may be provided to be separated and insulated from the storage compartments (storage compartment 2020 and storage compartment 2030)to prevent heat generated by the parts arranged in the machine room from being transferred to the storage compartments (storage compartment 2020 and storage compartment 2030). The inside of the machine room may be configured to communicate with the outside of the main body 2010 to dissipate heat from the parts arranged in the machine room.

According to an embodiment, the refrigerator 2000 may include a dispenser 2090 provided at one or more doors (multiple doors) 2021 to provide water and/or ice. The dispenser 2090 may be provided at the door 2021 to allow the user to approach thereto without opening the door 2021.

The dispenser 2090 may include a water-taking space 2091 where a container is mounted to take water or ice, and an operating lever configured to operate the dispenser 2090 to discharge water or ice.

According to an embodiment, the refrigerator 2000 may include an ice maker 2080 provided to generate ice. The ice maker 2080 may include an ice-making tray to store water, an ice-releasing device configured to release ice from the ice-making tray, and an ice bucket 2083 to store ice made in the ice-making tray.

The ice maker 2080 may be located in an ice making chamber 2081 located at an upper corner of the storage compartment 2020. The ice making chamber 2081 may be provided to be separated from the storage compartment 2020 by an ice making chamber wall 2082. The ice making chamber 2081 may be provided with an auger 2084 configured to transfer ice stored in the ice bucket 2083 to a chute 2094.

According to an embodiment, the refrigerator 2000 may include a water tank 2070 to store water. The water tank 2070 may be connected to an external water source. The water tank 2070 may store water purified by a water purifying filter 2050. A valve 2063 may be provided at a water supply line connecting the external water source with the water tank 2070.

According to an embodiment, the refrigerator 2000 may include a water supply flow path 2061 for ice making to supply water to the ice maker 2080, and a water supply flow path 2062 for the dispenser to supply water to the dispenser 2090.

According to an embodiment, the refrigerator 2000 may include a controller configured to control the refrigerator 2000.

The controller may process a user input of the user interface 2092 and control the operation of the user interface 2092. The user interface 2092 may be provided by using an input interface and an output interface. The controller may receive a user input from the user interface 2092. In addition, the controller may transmit a display control signal to display an image on the user interface 2092 and image data to the user interface 2092 in response to the user input.

The input interface may include a key, a touch screen, a microphone, and the like. The input interface may receive the user input and transmit the user input to a processor.

The output interface may include a display, a speaker, and the like. The output interface may output various notification, message, information, and the like produced by the processor.

The water treatment apparatus 1 according to various embodiments may be provided to remove ions from water supplied to the refrigerator 2000.

The water treatment apparatus 1 according to various embodiments may be located outside and/or inside the refrigerator 2000.

For example, the water treatment apparatus 1 may be located outside the refrigerator 2000 as shown in FIGS. 18 and 19. The water treatment apparatus 1 may be disposed outside the refrigerator 2000 and configured to remove ions from water supplied to the refrigerator 2000. The water treatment apparatus 1 may be provided at a flow path connecting the external water source with the refrigerator 2000.

For example, the water treatment apparatus 1 may be located inside the refrigerator 2000 as shown in FIG. 20. The water treatment apparatus 1 may be connected to a water supply line. For example, the first flow path 21 of the capacitive deionization module 100 may be connected to the water supply line. The water treatment apparatus 1 may be configured to remove ions from water passing through the water supply line. A position of the water treatment apparatus 1 is not limited to the water supply line and the water treatment apparatus 1 may be located at various positions where water supplied to the refrigerator 2000 may pass.

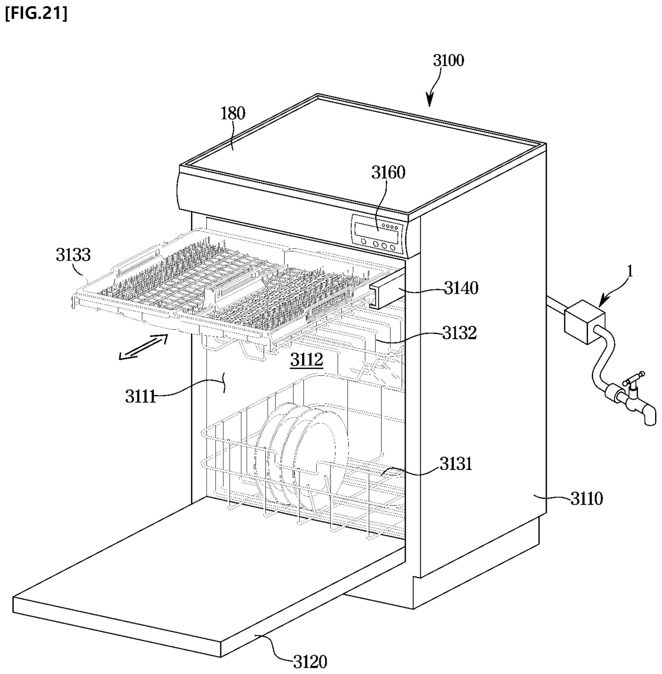

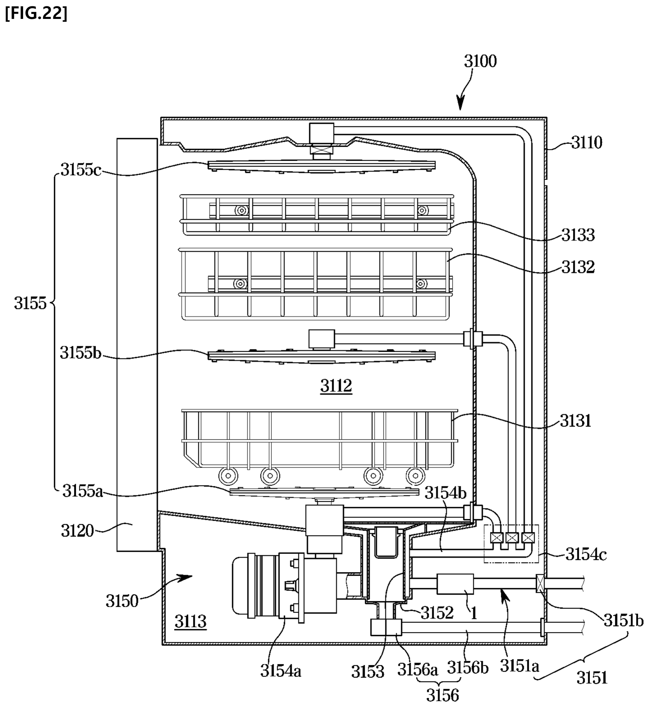

FIG. 21 illustrates a dishwasher connected to a water treatment apparatus according to an embodiment of the present disclosure. FIG. 22 is a cross-section to which the water treatment apparatus according to an embodiment of the present disclosure is applied.

Referring to FIGS. 21 and 22, a dishwasher 3100 to which the water treatment apparatus 1 according to an embodiment of the present disclosure is connected and/or applied will be described.

The dishwasher 3100 may include a main body 3110, a door 3120, an accommodating structure 3130, a sliding member 3140, a washing assembly 3150, and a user interface 3160.

The main body 3110 may define an exterior appearance of the dishwasher 3100. The main body 3110 may have an opening 3111 at one side, and a washing tub 3112 open and closed by the door 3120 and a machine room 3113 spatially separated from the washing tub 3112 may be located therein.

The door 3120 may be pivotally coupled to the main body 3110 and open and close the opening 3111 of the main body 3110. The door 3120 may be coupled to a lower region of the main body 3110 by hinges. A handle or a groove for the handle may be formed at the outer side of the door 3120 such that the user may manually open the door 3120.

The accommodating structure 3130 is located to be spaced apart from the washing tub 3112, is slidable forward and backward, has holes with various sizes, and includes first and second baskets (first basket 3131 and second basket 3132) and a cutlery 3133 to accommodate dishes and the like.

In this regard, the first basket 3131 accommodates various tableware to be washed such as dishes, plates, and cookware, the second basket 3132 accommodates cups, and the like, and the cutlery 3133 accommodates forks, table knives, spoons, chopsticks, knives, ladles, and like.

The sliding member 3140 may be provided in the washing tub 3112 to guide and slide movement of each of the first and second baskets (first basket 3131 and second basket 3132) and the cutlery 3133.

The washing assembly 3150 may be provided in the machine room 3113 and the washing tub 3112 and include a water supply device 3151, a sump 3152, a heater 3153, a circulator 3154, a nozzle assembly 3155, and a drain device 3156 configured to perform a washing cycle, a rinsing cycle, a drying cycle, and the like.

The water supply device 3151 includes a water supply pipe 3151a located between the external water source and the sump 3152 and guiding water introduced from the outside to the sump 3152 and a water supply valve 3151b blocking water introduced from the outside.

The sump 3152 stores water introduced through the water supply pipe 3151a. The water dissolves a detergent to become wash water, and the wash water circulates the washing tub 3112, the sump 3152, the circulator 3154, and the nozzle assembly 3155.

The heater 3153 is located around the sump 3152 and heats wash water contained in the sump 3152.

Also, the sump 3152 may further be provided with a temperature detector to detect temperature of water.

The circulator 3154 is provided between the sump 3152 and the nozzle assembly 3155 and pumps wash water contained in the sump 3152 and supply the wash water to the nozzle assembly 3155 via a circulation pipe 3154b.

The circulator 3154 includes a circulation pump 3154a configured to pump wash water contained in the sump 3152, a plurality of circulation pipes 3154b to guide the pumped wash water to the nozzle assembly 3155, and a valve 3154c provided at each circulation pipe 3154b to control circulation of the pumped wash water.

The nozzle assembly 3155 sprays the wash water supplied by the circulator 3154 to various tableware placed in the first and second basket 3131, 3132 and the cutlery 3133.

The nozzle assembly 3155 includes a first nozzle 3155a located below the first basket 3131, a second nozzle 3155b located between the first basket 3131 and the second basket 3132, and a third nozzle 3155c located above the cutlery 3133. The first nozzle 3155a, the second nozzle 3155b, and the third nozzle 3155c may be rotated by a rotor.

The drain device 3156 discharges wash water contained in the sump 3152 to the outside.

The drain device 3156 includes a drain pump 3156a configured to pump wash water contained in the sump 3152 and a drain pipe 3156b to guide the pumped wash water to the outside. In addition, the drain device 3156 may further include a drain valve to control external discharging of the wash water contained in the sump 3152 to the outside.

The user interface 3160 may be provided at the main body 3110 and manipulate and display operation information of the dishwasher.

The user interface 3160 receives operation information such as various washing courses (e.g., standard course and manual course) and additional rinsing by an instruction of the user, displays information on the ongoing operation, and the like, and displays error information in the event of occurrence of an error.

In this regard, the washing course includes a washing cycle to wash tableware by spraying the wash water to the tableware, a rinsing cycle to rinse the tableware by spraying ringing water to the tableware, and a drying cycle to dry the rinsed tableware.

The water treatment apparatus 1 according to various embodiments may be configured to remove ions from water supplied to the dishwasher 3100.

The water treatment apparatus 1 according to various embodiments may be located outside and/or inside the dishwasher 3100.

For example, the water treatment apparatus 1 may be located outside of the dishwasher 3100 as shown in FIG. 21. The water treatment apparatus 1 may be located outside the dishwasher 3100 and configured to remove ions from water supplied to the dishwasher 3100. The water treatment apparatus 1 may be provided at a flow path connecting an external water source with the dishwasher 3100.

For example, the water treatment apparatus 1 may be located inside the dishwasher 3100 as shown in FIG. 22. The water treatment apparatus 1 may be connected to the water supply pipe 3151a. For example, the first flow path 21 of the capacitive deionization module 100 may be connected to the water supply pipe 3151a. The water treatment apparatus 1 may be configured to remove ions from water passing through the water supply pipe 3151a. A position of the water treatment apparatus 1 is not limited to a water supply pipe 3151a and the water treatment apparatus 1 may be located at various positions where water supplied to the dishwasher 3100 may pass.

The water treatment apparatus 1 may perform a deionization operation during a water supply cycle of the dishwasher 3100. The water supply cycle of the dishwasher 3100 may include a washing cycle and a rinsing cycle.

In an embodiment, the dishwasher 3100 may transmit a water supply initiation signal to the water treatment apparatus 1 upon determination that conditions for initiating the water supply cycle are satisfied. The water treatment apparatus 1 may perform the deionization operation in response to receiving the water supply initiation signal from the dishwasher 3100.

The water treatment apparatus 1 may perform a regeneration operation in response to termination of the water supply cycle of the dishwasher 3100. In an embodiment, the dishwasher 3100 may transmit a water supply termination signal to the water treatment apparatus 1 upon determination that conditions for stopping the water supply cycle are satisfied. The water treatment apparatus 1 may perform the regeneration operation in response to receiving the water supply termination signal from the dishwasher 3100.

Upon determination that conditions for a descaling operation, the water treatment apparatus 1 may perform the descaling operation while the dishwasher 3100 does not perform the water supply cycle.

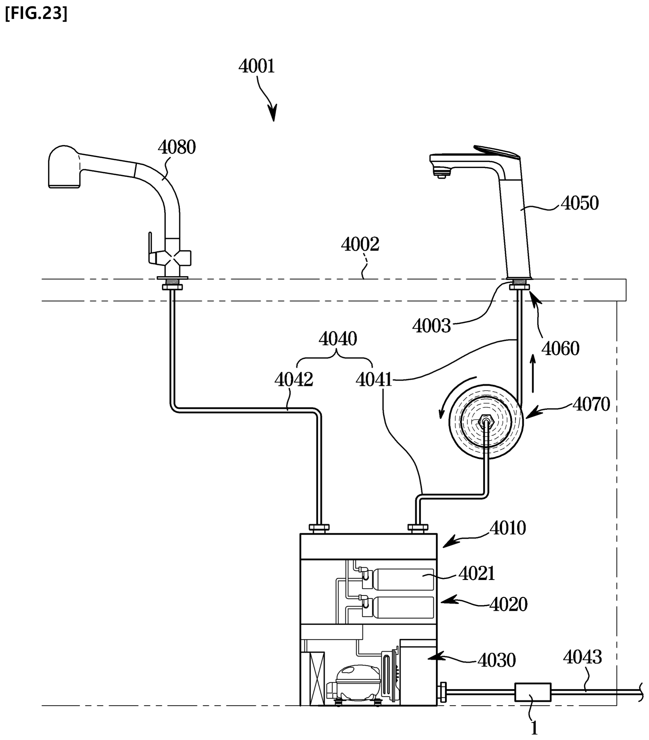

FIG. 23 illustrates a water purifier to which a water treatment apparatus according to an embodiment of the present disclosure is applied.

Referring to FIG. 23, a water purifier 4001 according to an embodiment of the present disclosure will be described. The water purifier 4001 illustrated in FIG. 23 may include the water treatment apparatus 1.

Referring to FIG. 23, the water purifier 4001 may include a filtering body 4010, and a dispenser 4050 connected to the filtering body 4010 and configured to discharge a liquid out of the filtering body 4010. The filtering body 4010 may be located under a kitchen worktop 4002, and the dispenser 4050 may be located on the kitchen worktop 4002. The kitchen worktop 4002 may include a sink. The sink may include a sink bowl and a kitchen countertop.

The dispenser 4050 may be rotatably provided at the top of the kitchen worktop 4002. For example, the dispenser 4050 may be rotatably installed at the top of the sink. The dispenser 4050 may be connected to the filtering body 4010 via the connection pipe 4040.

The filtering body 4010 may be located inside the kitchen worktop 4002. The filtering body 4010 may include a filter unit 4020 including at least one filter 4021, and a heat exchanger 4030 provided to cool or heat a liquid purified by the filter unit 4020. The heat exchanger 4030 may include a cooler and a heater.

The filtering body 4010 may receive raw water such as tap water via an external pipe 4043.

A connection pipe 4040 of the filtering body 4010 may include a first pipe 4041 connecting the filtering body 4010 with the dispenser 4050 and a second pipe 4042 connecting the filtering body 4010 with a faucet 4080 installed at the kitchen worktop 4002.

The kitchen worktop 4002 may be provided with an installation member 4003 for installing the dispenser 4050. The installation member 4003 may be formed by opening at least one portion of the kitchen worktop 4002. The dispenser 4050 may be connected to the first pipe 4041 via the installation member 4003 of the kitchen worktop 4002.

The dispenser 4050 may be rotatably installed at the installation member 4003. The water purifier 4001 may include a rotating member 4060 to rotatably install the dispenser 4050 to the installation member 4003. The rotating member 4060 may be coupled to the kitchen worktop 4002.

The water purifier 4001 may include a pipe-fixing member 4070 provided to fix pipes (pipe 4041 and pipe 4042). The pipe-fixing member 4070 may be located inside the kitchen worktop 4002. The pipe-fixing member 4070 may be disposed between the filtering body 4010 and the dispenser 4050. The pipe-fixing member 4070 may be fixed to at least one of the filtering body 4010 and the kitchen worktop 4002. At the pipe-fixing member 4070, parts of the pipes (pipe 4041 and pipe 4042) may be wound. As the parts of the pipes (pipe 4041 and pipe 4042) are wound or unwound at the pipe-fixing member 4070, lengths of the pipes (pipe 4041 and pipe 4042) may be increased or decreased.

The water purifier 4001 according to an embodiment may include the water treatment apparatus 1. The water treatment apparatus 1 may be connected to an external pipe 4043. For example, the first flow path 21 of the capacitive deionization module 100 may be connected to the external pipe 4043. The water treatment apparatus 1 may be configured to remove ions from water passing through the external pipe 4043. A position of the water treatment apparatus 1 is not limited to the external pipe 4043 and the water treatment apparatus 1 may be located at various positions where water supplied to the water purifier 4001 may pass.

The electrode for a capacitive deionization apparatus according to an embodiment may include a current collector and an active material layer disposed on one side of the current collector, wherein the active material layer includes: a plurality of pore structures including a plurality of carbon nanotubes; and a binder configured to fix the pore structures to the current collector, wherein the pore structure includes a wide bottom-narrow top structure widening in a direction away from the current collector.

In the electrode for a capacitive deionization apparatus according to an embodiment, an average diameter of the uppermost region of the pore structure having the wide bottom-narrow top structure may be 40% to 60% of an average diameter of the lowermost region of the pore structure.

In the electrode for a capacitive deionization apparatus according to an embodiment, a gap between the carbon nanotubes at the uppermost region may be 0.594 nm or more.

In the electrode for a capacitive deionization apparatus according to an embodiment, a gap between the carbon nanotubes at the uppermost region may be 1.548 nm or more.

In the electrode for a capacitive deionization apparatus according to an embodiment, the carbon nanotubes may have a length of 20 $\mu$m to 300 $\mu$m.

In the electrode for a capacitive deionization apparatus according to an embodiment, an outermost cross-section of the pore structure in a direction away from the current collector may satisfy Expression (1) below.

2.0 ≤ (sum of edge lengths of cross-section)/(area of cross-section) ≤ 2.3     Expression (1):

In the electrode for a capacitive deionization apparatus according to an embodiment, the pore structure may have a comb shape to enlarge a contact area with water.

In the electrode for a capacitive deionization apparatus according to an embodiment, the binder may include at least one selected from polydimethylsiloxane (PDMS), styrene butadiene rubber (SBR), carboxy methyl cellulose (CMC), polytetrafluoroethylene (PTFE), and polyvinylidene fluoride (PDVF).

A water treatment apparatus according to an embodiment includes at least one capacitive deionization module including a first electrode, a second electrode, and a channel formed between the first electrode and the second electrode, wherein the first electrode and the second electrode include a current collector and an active material layer disposed on one side of the current collector, wherein the active material layer includes: a plurality of pore structures including a plurality of carbon nanotubes; and a binder fixing the pore structures to the current collector, and the pore structure has a wide bottom-narrow top structure widening in a direction away from the current collector.

In the water treatment apparatus according to an embodiment, an outermost cross-section of the pore structure in a direction away from the current collector may satisfy Expression (1) below.

2.0 ≤ (sum of edge lengths of cross-section)/(area of cross-section) ≤ 2.3                    Expression (1):

In the water treatment apparatus according to an embodiment, the pore structure may have a comb shape to enlarge a contact area with water.

In the water treatment apparatus according to an embodiment, the binder may include at least one selected from polydimethylsiloxane (PDMS), styrene butadiene rubber (SBR), carboxy methyl cellulose (CMC), polytetrafluoroethylene (PTFE), and polyvinylidene fluoride (PDVF).

In the water treatment apparatus according to an embodiment, the capacitive deionization module may further include an ion-exchange membrane between the first electrode and the channel and between the second electrode and the channel.

A method of manufacturing an electrode for a capacitive deionization apparatus according to an embodiment may include: depositing a Fe catalyst on a surface of a silicon substrate by patterning; growing carbon nanotubes by applying a carbon source gas to the deposited Fe catalyst; fixing the grown carbon nanotubes to the silicon substrate by a first binder; condensing the carbon nanotubes to form a pore structure having a wide top-narrow bottom structure narrowing in a direction away from the silicon substrate; and

forming a pore structure having a wide bottom-narrow top structure widening in a direction away from the current collector by transferring the condensed carbon nanotubes onto the surface of the current collector coated with a second binder.

In the method of manufacturing an electrode for a capacitive deionization apparatus according to an embodiment, the depositing of the Fe catalyst by patterning may include: forming a photoresist layer (PR layer) by depositing a photoresist substance on the surface of the Si substrate; depositing the Fe catalyst by forming a hole-shaped structure by patterning the photoresist layer; and etching the photoresist layer.

In the method of manufacturing an electrode for a capacitive deionization apparatus according to an embodiment, the condensing of the carbon nanotubes to form a pore structure having a wide top-narrow bottom structure may include condensing an area where the carbon nanotubes are not bound to the first binder by exposing the Si substrate, to which the carbon nanotubes are fixed by the first binder, to 50 wt% or less of acetone or ethanol vapor for 30 seconds or less, and forming a pore structure having a wide top-narrow bottom structure narrowing in a direction away from the Si substrate.

In the method of manufacturing an electrode for a capacitive deionization apparatus according to the present disclosure, the depositing of the Fe catalyst by patterning may include controlling the shape of the deposited Fe catalyst. With regard to the controlled shape of the Fe catalyst, the outermost cross-section may satisfy Expression (1) below.

2.0 ≤ (sum of edge lengths of cross-section)/(area of cross-section) ≤ 2.3                    Expression (1):

In the method of manufacturing an electrode for a capacitive deionization apparatus according to the present disclosure, the growing of the carbon nanotubes may include forming a comb shape by growing the carbon nanotubes to have different lengths by depositing the Fe catalyst on the surface of the Si substrate including a plurality of grooves.

The electrode for a capacitive deionization apparatus, the method of manufacturing the same, and the water treatment apparatus are described above.

According to the present disclosure, since a pore-clogging phenomenon and a co-ion repulsion caused by ions adsorbed to the surfaces of the electrodes may be minimized, ion adsorption performance may be improved, and accordingly an electric double layer may be formed over the entire surface area, thereby minimizing performance difference between electrodes. The intensity of an electric field generated by applying a voltage may be optimized by controlling a shape of an outer region of the pore structure. Ion adsorption performance may be improved by forming a structure maximizing the surface area by controlling the length of the carbon nanotube structure, and accordingly the size of the module may be minimized and the number of stacked electrodes may be reduced. In addition, a polymer binder may support the structure of the electrode and minimize delamination from the current collector.

However, the effects obtainable by the present disclosure are not limited to the aforementioned effects, and any other effects not mentioned herein will be clearly understood from the following description by those skilled in the art to which the present disclosure pertains.

The foregoing has illustrated and described specific embodiments. However, it should be understood by those of skilled in the art that the disclosure is not limited to the above-described embodiments, and various changes and modifications may be made without departing from the technical idea of the disclosure described in the following claims.

[Description of Reference Numerals]

| 1: | water treatment apparatus | 11ab: | first electrode |
|---|---|---|---|
| 11a: | first current collector | 11b: | first activation layer |
| 111b: | carbon nanotubes | 112b: | binder |
| 113b: | first pore structure | 12ab: | second electrode |
| 12a: | second current collector | 12b: | second activation layer |
| 121b: | carbon nanotubes | 122b: | binder |
| 123b: | second pore structure | 14: | Si substrate |
| 17: | scales | 20: | flow paths |
| 100: | CDI module | | |

**Claims**

1. An electrode for a capacitive deionization apparatus, the electrode comprising:

   a current collector; and
   an active material layer disposed on one side of the current collector,
   wherein the active material layer comprises:

      a plurality of pore structures, each of the plurality of pore structures comprising a plurality of carbon nanotubes; and
      a binder fixing the plurality of pore structures to the current collector, and

   wherein the each of the plurality of pore structures include a wide bottom-narrow top structure widening in a direction away from the current collector.

2. The electrode according to claim 1, wherein an average diameter of an uppermost region of each of the plurality of pore structures is 40% to 60% of an average diameter of a lowermost region of the pore structure.

3. The electrode according to claim 1, wherein a gap between ones of the plurality of carbon nanotubes at an uppermost region of each of the plurality of pore structures is 0.594 nm or more.

4. The electrode according to claim 1, wherein a gap between ones of the plurality of carbon nanotubes at an uppermost region of each of the plurality of pore structures is 1.548 nm or more.

5. The electrode according to claim 1, wherein each of the plurality of carbon nanotubes has a length of 20 $\mu$m to 300 $\mu$m.

6. The electrode according to claim 1, wherein an outermost cross-section of each of the plurality of pore structures in a direction away from the current collector satisfies Expression (1) below:

   $2.0 \leq$ (a sum of edge lengths of the outermost cross-section)/(an area of the outermost cross-section) $\leq 2.3$.     Expression (1):

7. The electrode according to claim 1, wherein each of the plurality of pore structures has a comb shape.

8. The electrode according to claim 1, wherein the binder comprises at least one selected from polydimethylsiloxane (PDMS), styrene butadiene rubber (SBR), carboxy methyl cellulose (CMC), polytetrafluoroethylene (PTFE), and polyvinylidene fluoride (PDVF).

9. A water treatment apparatus comprising:

   at least one capacitive deionization module comprising:

   a first electrode;
   a second electrode, and
   a channel formed between the first electrode and the second electrode,

   wherein each of the first electrode and the second electrode comprises a current collector and an active material layer disposed on one side of the current collector,
   wherein the active material layer comprises:

   a plurality of pore structures including a plurality of carbon nanotubes; and
   a binder fixing the plurality of pore structures to the current collector, and

   wherein each of the plurality of pore structures includes a wide bottom-narrow top structure widening in a direction away from the current collector.

10. The water treatment apparatus according to claim 9, wherein an outermost cross-section of each of the plurality of pore structures in a direction away from the current collector satisfies Expression (1) below:

    (a sum of edge lengths of the outermost cross-section)/(an area of the outermost cross-section) $\leq$ 2.3.                    Expression (1):

11. The water treatment apparatus according to claim 9, wherein each of the plurality of pore structures has a comb shape.

12. The water treatment apparatus according to claim 9, wherein the binder comprises at least one selected from polydimethylsiloxane (PDMS), styrene butadiene rubber (SBR), carboxy methyl cellulose (CMC), polytetrafluoroethylene (PTFE), and polyvinylidene fluoride (PDVF).

13. The water treatment apparatus according to claim 9, wherein the at least one capacitive deionization module further comprises an ion-exchange membrane between the first electrode and the channel and between the second electrode and the channel.

14. A method of manufacturing an electrode for a capacitive deionization apparatus, the method comprising:

    depositing, by patterning, an iron (Fe) catalyst on a surface of a silicon substrate;
    growing carbon nanotubes by applying a carbon source gas to the deposited Fe catalyst;
    fixing, by a first binder, the grown carbon nanotubes to the silicon substrate;
    condensing the carbon nanotubes to form a first pore structure comprising a wide top-narrow bottom structure narrowing in a direction away from the silicon substrate; and
    forming, by transferring the condensed carbon nanotubes onto a surface of a current collector coated with a second binder, a second pore structure including a wide bottom-narrow top structure widening in a direction away from the current collector.

[FIG.1]

20 : 21, 22, 23, 24
30 : 30a, 30b

[FIG.2]

113b,123b

[FIG.3]

[FIG.4]

[FIG.5]

[FIG.6]

DEIONIZED
WATER

12ab

11ab

(−)

(+)

[FIG.7]

WASTEWATER

[FIG.8]

DEIONIZED
WATER

[FIG.9]

```
┌─────────────────────────────────────┐
│       PATTERNING Fe CATALYST         │
└─────────────────────────────────────┘
                  │
                  ▼
┌─────────────────────────────────────┐
│      GROWING CARBON NANOTUBES        │
└─────────────────────────────────────┘
                  │
                  ▼
┌─────────────────────────────────────┐
│       FIXING CARBON NANOTUBES        │
└─────────────────────────────────────┘
                  │
                  ▼
┌─────────────────────────────────────┐
│     CONDENSING CARBON NANOTUBES      │
└─────────────────────────────────────┘
                  │
                  ▼
┌─────────────────────────────────────┐
│    TRANSFERING CARBON NANOTUBES      │
│        TO CURRENT COLLECTOR          │
└─────────────────────────────────────┘
```

[FIG.10]

[FIG.11]

[FIG.12]

14

121b

[FIG.13]

[FIG.14]

S4800 15.0kV 12.6mm x250 SE(M)　　　　　200um

[FIG.15]

[FIG.16]

[FIG.17]

[FIG.18]

[FIG.19]

[FIG.20]

2000

[FIG.21]

[FIG.22]

[FIG.23]

## INTERNATIONAL SEARCH REPORT

| | |
|---|---|
| International application No. | |
| | **PCT/KR2024/006520** |

| | | |
|---|---|---|
| **A.** | **CLASSIFICATION OF SUBJECT MATTER** | |
| | **C02F 1/469**(2006.01)i; **C02F 1/461**(2006.01)i; **B01D 61/42**(2006.01)i | |

According to International Patent Classification (IPC) or to both national classification and IPC

| | |
|---|---|
| **B.** | **FIELDS SEARCHED** |

Minimum documentation searched (classification system followed by classification symbols)

C02F 1/469(2006.01); B01D 63/02(2006.01); C02F 1/28(2006.01); C25B 9/00(2006.01); H01L 21/02(2006.01); H01L 21/203(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탈이온(deionization), 전극(electrode), 탄소 나노튜브(carbon nanotube), 채널 (channel), 활물질(active material)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | KR 10-2017-0030087 A (AMOGREENTECH CO., LTD.) 16 March 2017 (2017-03-16)<br>  See claims 1-8; paragraphs [0015]-[0029]; and figures 1-5. | 1-14 |
| A | KR 10-2011-0071701 A (SAMSUNG ELECTRONICS CO., LTD.) 29 June 2011 (2011-06-29)<br>  See paragraphs [0054] and [0057]. | 1-14 |
| A | US 6798639 B2 (FARIS, S. M. et al.) 28 September 2004 (2004-09-28)<br>  See column 7, lines 16-28; and figure 5. | 1-14 |
| A | CN 115571954 B (HEFEI INSTITUTES OF PHYSICAL SCIENCE, CHINESE ACADEMY OF SCIENCES et al.) 07 March 2023 (2023-03-07)<br>  See claims 1-6. | 1-14 |
| A | KR 10-2021-0011776 A (KOREA ADVANCED INSTITUTE OF SCIENCE AND TECHNOLOGY) 02 February 2021 (2021-02-02)<br>  See paragraphs [0032]-[0045]. | 1-14 |

| | |
|---|---|
| ✓ Further documents are listed in the continuation of Box C. | ✓ See patent family annex. |

| | |
|---|---|
| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| | |
|---|---|
| Date of the actual completion of the international search | Date of mailing of the international search report |
| **04 September 2024** | **04 September 2024** |

| | |
|---|---|
| Name and mailing address of the ISA/KR | Authorized officer |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/006520**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2016-0144583 A (INDUSTRY-ACADEMIC COOPERATION FOUNDATION, DANKOOK UNIVERSITY) 19 December 2016 (2016-12-19)<br>  See claims 1-10. | 1-14 |

Form PCT/ISA/210 (second sheet) (July 2022)

**INTERNATIONAL SEARCH REPORT**
Information on patent family members

International application No.

**PCT/KR2024/006520**

| Patent document cited in search report | | | Publication date (day/month/year) | Patent family member(s) | | | Publication date (day/month/year) |
|---|---|---|---|---|---|---|---|
| KR | 10-2017-0030087 | A | 16 March 2017 | CN | 105408260 | A | 16 March 2016 |
| | | | | CN | 105408260 | B | 13 November 2018 |
| | | | | KR | 10-2015-0032221 | A | 25 March 2015 |
| | | | | US | 10472262 | B2 | 12 November 2019 |
| | | | | US | 2016-0159667 | A1 | 09 June 2016 |
| | | | | WO | 2015-041453 | A1 | 26 March 2015 |
| KR | 10-2011-0071701 | A | 29 June 2011 | EP | 2338843 | A1 | 29 June 2011 |
| | | | | EP | 2338843 | B1 | 27 June 2018 |
| | | | | US | 2011-0147212 | A1 | 23 June 2011 |
| | | | | US | 8557098 | B2 | 15 October 2013 |
| US | 6798639 | B2 | 28 September 2004 | US | 2004-0095706 | A1 | 20 February 2004 |
| | | | | US | 2005-0036270 | A1 | 17 February 2005 |
| CN | 115571954 | B | 07 March 2023 | CN | 115571954 | A | 06 January 2023 |
| KR | 10-2021-0011776 | A | 02 February 2021 | US | 11975295 | B2 | 07 May 2024 |
| | | | | US | 2021-0023506 | A1 | 28 January 2021 |
| KR | 10-2016-0144583 | A | 19 December 2016 | | None | | |

Form PCT/ISA/210 (patent family annex) (July 2022)